# FASCICULE DE BREVET EUROPEEN

(11) **EP 2 850 223 B1**
(45) Date de publication et mention de la délivrance du brevet: **18.03.2020**
(21) Numéro de dépôt: 13723759.0
(22) Date de dépôt: 16.05.2013
(51) Int. Cl.: C23C 18/04, C23C 18/12, B82Y 30/00, B01J 13/00, C23C 24/08

(54) **PROCEDE DE FABRICATION D'UN MATERIAU COMPOSITE**
VERFAHREN ZUR HERSTELLUNG EINES VERBUNDWERKSTOFFS
PROCESS FOR MANUFACTURING A COMPOSITE MATERIAL

(30) Priorité: 16.05.2012 BE 201200326
(43) Date de publication de la demande: 25.03.2015
(73) Titulaire: Prayon S.A., 4480 Engis (BE); Université de Liège, 4031 Angleur (BE)
(72) Inventeur: LIQUET, Dimitri, 4031 Angleur (BE); PAEZ, Carlos Alberto, 4160 Beyne-Heusay (BE); CALBERG, Cédric, 4130 Esneux (BE); ESKENAZI, David, 4020 Liège (BE); PIRARD, Jean-Paul, 4032 Chênée (BE); HEINRICHS, Benoit, 4000 Liège (BE)
(74) Mandataire: Gevers Patents
(86) Numéro de dépôt international: PCT/EP2013/060129
(87) Numéro de publication internationale: WO 2013/171297

(56) Documents cités:
- CN-B- 102 021 557
- US-A1- 2003 091 835
- US-A1- 2004 101 620
- US-A1- 2008 032 117
- GRESSEL-MICHEL E ET AL: "From a microwave flash-synthesized TiO2 colloidal suspension to TiO2 thin films", JOURNAL OF COLLOID AND INTERFACE SCIENCE, ACADEMIC PRESS, NEW YORK, NY, US, vol. 285, no. 2, 15 mai 2005 (2005-05-15), pages 674-679, XP004853311, ISSN: 0021-9797, DOI: 10.1016/J.JCIS.2004.12.055
- THOMAS I M: "SINGLE-LAYER TIO2 AND MULTILAYER TIO2-SIO2 OPTICAL COATINGS PREPARED FROM COLLOIDAL SUSPENSIONS", APPLIED OPTICS, OPTICAL SOCIETY OF AMERICA, WASHINGTON, DC; US, vol. 26, no. 21, novembre 1987 (1987-11), pages 4688-4691, XP001216707, ISSN: 0003-6935, DOI: 10.1364/AO.26.004688
- SOCHA ET AL: "Effect of deposition conditions on the formation of silica-silicate thin films", SURFACE AND COATINGS TECHNOLOGY, ELSEVIER, AMSTERDAM, NL, vol. 201, no. 12, 2 février 2007 (2007-02-02), pages 5960-5966, XP005870210, ISSN: 0257-8972, DOI: 10.1016/J.SURFCOAT.2006.11.003
- WU K ET AL: "Electrophoretic deposition of TiO2 and composite TiO2-MnO2 films using benzoic acid and phenolic molecules as charging additives", JOURNAL OF COLLOID AND INTERFACE SCIENCE, ACADEMIC PRESS, NEW YORK, NY, US, vol. 352, no. 2, 15 décembre 2010 (2010-12-15), pages 371-378, XP027415621, ISSN: 0021-9797 [extrait le 2010-10-12] cité dans la demande
- DAVID PORTEHAULT ET AL: "Morphology Control of Cryptomelane Type MnO 2 Nanowires by Soft Chemistry. Growth Mechanisms in Aqueous Medium", CHEMISTRY OF MATERIALS, vol. 19, no. 22, octobre 2007 (2007-10), pages 5410-5417, XP055053638, ISSN: 0897-4756, DOI: 10.1021/cm071654a cité dans la demande
- Yoshimasa Noda ET AL: "Development of Alternative Method of Blasting and Ultra-High Adhesive Strength Thermal Spray Coatings by Vacuum Arc Treatment", MATERIALS TRANSACTIONS, 25 March 2009 (2009-03-25), pages 825-831, XP055297236, Sendai DOI: 10.2320/matertrans.T-M2009801 Retrieved from the Internet: URL:https://www.jstage.jst.go.jp/article/m atertrans/50/4/50_T-M2009801/_pdf [retrieved on 2016-08-24]
- YIN ET AL: "Microstructure and mechanical properties of Al2O3-Al composite coatings deposited by plasma spraying", APPLIED SURFACE SCIENCE, ELSEVIER, AMSTERDAM, NL, vol. 254, no. 6, 20 December 2007 (2007-12-20), pages 1636-1643, XP022396414, ISSN: 0169-4332, DOI: 10.1016/J.APSUSC.2007.07.135

## Description

La présente invention se rapporte à un procédé de fabrication d'un matériau composite comprenant un substrat et un revêtement à base de poudre.

Un tel procédé est connu par exemple du document WO2012005977 qui décrit un procédé de revêtement de substrats dont la surface qui est imparfaite et qui peut être flexible, doit être revêtue d'une couche d'oxyde d'yttrium. Selon l'enseignement de ce document, une solution d'un précurseur d'oxyde d'yttrium dans un solvant est appliquée par revêtement du substrat par une couche de la solution. Ensuite, le substrat est chauffé pour éliminer le solvant et le précurseur d'oxyde est converti en oxyde d'yttrium. Cette succession d'étapes peut être répétée.

Malheureusement, un tel procédé demande une quantité d'énergie élevée pour effectuer la conversion du précurseur d'oxyde d'yttrium en oxyde d'yttrium, ce qui ne cadre pas avec les règlementations environnementales de plus en plus strictes actuellement. De plus, le revêtement obtenu est prévu pour boucher des rugosités mais ne semble pas approprié pour recouvrir un substrat de manière homogène. Dans le cadre de la présente invention, on entend par le terme « calcination » une étape consistant à chauffer un échantillon minéral à haute température (typiquement au-delà de 500 °C et jusqu'environ 1200 °C) sous air ou sous atmosphère neutre. Par distinction, on entend par le terme « combustion » une étape consistant à chauffer un échantillon organique en présence d'un comburant par exemple l'air ou de l'oxygène pur pour produire typiquement de l'eau et du CO₂, cette étape se produisant typiquement à des températures inférieures à 500 °C.

D'autres procédés sont également connus dans l'état de la technique comme l'électrodéposition de matériaux céramiques par électrolyse (ELD) ou par électrophorèse (EPD). L'électrodéposition est réalisée par le mouvement de particules chargées sous l'application d'un champ électrique. Ces particules chargées sont initialement en solution et se déposent sur une électrode. Le dépôt de particules par électrolyse produit des particules colloïdales dans des réactions cathodiques pour qu'elles se déposent ensuite.

Malheureusement, ce type de procédé demande des installations parfois très conséquentes lorsqu'il s'agit d'appliquer ces particules colloïdales sur de grandes surfaces et demande une quantité d'énergie relativement importante pour extraire les particules colloïdales et ensuite les faire migrer ou pour simplement les faire migrer selon que l'on se trouve dans un procédé ELD ou EPD.

Dans le cadre du dépôt de particules par électrolyse, des forces entre les particules existent qui peuvent provoquer quantités d'inconvénients comme la coagulation de la suspension colloïdale, la présence généralement requise d'additifs, ...

Ceci aboutit donc dans certains cas à la non homogénéité du revêtement et à la présence de molécules contaminantes, non souhaitées.

Récemment, Zhitomirsky et coll. (J. Colloid Interface Science 352 (2010 - pages 371 à 378)) ont étudié le dépôt de particules par électrolyse pour fabriquer des films de TiO₂ et de MnO₂. Certains additifs de la suspension colloïdale à base d'acide benzoïque et comprenant des molécules phénoliques ont été testés tels que l'acide 4-hydroxybenzoique, l'acide 3,5-dihydroxybenzoique, l'acide gallique, l'acide salicylique et ses sels sodiques. Les rendements de dépôt ont été étudiés en fonction de la concentration d'additifs et du temps de dépôt pour des dépôts à la cathode des suspensions contenant de l'acide benzoïque, l'acide 4-hydroxybenzoique et l'acide 3,5-dihydroxybenzoique et pour des dépôts à l'anode des suspensions contenant de l'acide gallique ou des sels sodiques d'acide salicylique.

Les résultats obtenus pour les molécules phénoliques comprenant un nombre variable de groupements OH ont été analysés par rapport aux résultats obtenus avec l'acide benzoïque ne comprenant pas de groupe OH. Les groupes OH, mais également les groupes OH adjacents à des groupes COOH liés aux cycles aromatiques des molécules phénoliques sont bénéfiques pour l'adsorption des molécules sur les particules d'oxydes. Les mécanismes d'adsorption semblent impliquer une interaction des groupements COOH et OH des molécules organiques avec les ions métalliques à la surface des particules. L'acide gallique est un additif de charge efficace qui procure la stabilisation des particules de TiO₂ et de MnO₂ dans les suspensions et permet leur dépôt. Des films composites contenant TiO₂-MnO₂ peuvent être obtenus avec l'acide gallique comme agent dispersant commun pour TiO₂ et MnO₂. Le rapport Ti/Mn dans le film composite pouvait aller jusqu'à 1,3. L'épaisseur des films pouvait aller jusqu'à 10 µm. La suspension d'oxyde qui y est divulguée aboutit en outre à un revêtement dont les propriétés d'adhérence ne sont pas divulguées. La reproduction de l'enseignement de ce document conduit en outre au dépôt d'un film qui s'enlève facilement et qui est donc non adhérent.

Malheureusement, ces techniques impliquent une consommation énergétique élevée et sont généralement coûteuses à mettre en œuvre.

De plus, on connaît des dépôts de particules de poudre par PVD (physical vapor deposition) sur des tôles d'acier ou sur des disques de silicium recouverts de platine. Malheureusement, ces procédés impliquent également des dépenses énergétiques importantes pour garantir les conditions propices au dépôt de la couche (vide poussé) et impliquent une lenteur de dépôt difficilement adaptable à la production industrielle. De plus, le coût de telle installation est prohibitif.

Les dépôts par voie sol-gel sur des objets en verre (verre optique ou verre utilisé dans le bâtiment) constituent aujourd'hui une alternative aux méthodes et procédés de dépôt précités, mais introduisent la plupart du temps la présence de matériaux ou d'éléments qui ne sont pas toujours spécifiquement désirés dans les couches déposées.

Les produits composites comprenant donc un substrat et un revêtement issus de ces procédés par voie sol-gel font l'objet d'un intérêt croissant du marché dans les domaines de l'optique, de l'électronique, de la construction, pour conférer des fonctions particulières à des surfaces qui en sont initialement dépourvues, mais aussi dans des domaines aussi variés que l'électroménager, les matériaux autonettoyants dans la construction ou plus spécifiquement des matériaux à destination du marché de l'énergie verte avec les surfaces photovoltaïques ou les surfaces de concentrateurs solaires, les matériaux à destination des dispositifs de stockage d'énergie tels que les batteries lithium ion, les supercapacités ou encore les matériaux catalytiques.

L'intérêt du marché décrit ci-dessus réside aussi dans la capacité à pouvoir déposer des couches de revêtement de mélanges d'oxydes ou de couches composites.

La demande US 2008/032117 décrit un procédé de revêtement d'un substrat utilisant une dispersion d'une poudre d'oxyde métallique. Cependant, cette demande ne décrit pas la fonctionnalisation de ladite poudre par un agent portant une fonction carboxyle ou carboxylate.

La présente invention se rapporte donc plus particulièrement à un procédé de fabrication d'un matériau composite comprenant un substrat et un revêtement à base de poudre comprenant :
a) une fonctionnalisation du substrat par des groupements OH, ladite fonctionnalisation comprenant un traitement d'une surface dudit substrat par une première solution contenant au moins un premier solvant choisi dans le groupe constitué de l'eau et des alcools organiques, à chaîne linéaire, saturée ou insaturée, comprenant au moins une fonction alcool, et de préférence choisi dans le groupe du méthoxyéthanol, de l'éthanol, de l'éthylène glycol, du 1-propanol, du méthanol, du n-butanol, du 2-phényléthanol et du 2-propanol et leurs mélanges,
b) fonctionnalisation dans un deuxième solvant d'une première poudre comprenant un oxyde d'alcalin, un oxyde d'alcalino-terreux, un oxyde de métal de transition, un oxyde de métal pauvre, un oxyde de métalloïde, un oxyde de lanthanide ou un oxyde d'actinide, de préférence un oxyde métallique et/ou un oxyde de silicium, de manière plus préférentielle comprenant un ou plusieurs oxydes choisi(s) dans le groupe des oxydes de lithium, de sodium, de cérium, de titane, de vanadium, de chrome, de molybdène, de manganèse, de fer, de cobalt, de palladium, de cuivre, de zinc, de cadmium, d'aluminium, de silicium, d'étain et de plomb et de leurs combinaisons, telles que les oxydes mixtes de cobalt et de lithium, de fer et de manganèse, de lithium et de titane, par un agent portant une fonction carboxyle ou carboxylate et formation d'un premier sol colloïdal stable à base de ladite première poudre, fonctionnalisée par ledit agent portant une fonction carboxyle ou carboxylate,
c) au moins une application d'au moins une couche dudit premier sol colloïdal sur le substrat fonctionnalisé,
d) un séchage de ladite au moins une couche dudit premier sol colloïdal et
e) une formation d'une couche de premier revêtement formé par ledit premier sol colloïdal, adhérent audit substrat, par chauffage à une température supérieure à 50°C et inférieure à 500°C, ledit revêtement étant formé de ladite première poudre uniformément répartie.

On connaît un procédé de ce type de l'article de E.Gressel-Michel et coll. Intitulé « From a microwave flash-synthesized TiO₂ colloidal suspension to TiO₂ thin films » qui enseigne un procédé de préparation d'un sol colloïdal de TiO₂ qui a été synthétisé par la méthode RAMO (Réacteur autoclave microonde) consistant à exposer une solution aqueuse contenant du TiCl₄ et HCl à des microondes. Des couches minces, à base du sol colloïdal de TiO₂, sont ensuite appliquées par immersion (dip coating) sur un substrat, par exemple un verre sodo-calcique, préalablement fonctionnalisé dans de l'éthanol.

Malheureusement, ce type de procédé ne permet pas de contrôler parfaitement les caractéristiques de l'oxyde puisque celui-ci est généré *in situ* à partir de précurseurs (TiCl₄ et HCl). De plus, ce document divulgue (point 3.5 du document) que la couche mince n'a pas pu être caractérisée par DRX ce qui amène le lecteur à conclure que la couche mince à base de TiO₂ n'est pas cristallisée et n'est pas de l'anatase pure. Enfin, le procédé implique l'utilisation d'un réacteur autoclave microonde (RAMO) ce qui rend le procédé contraignant d'un point de vue économique et pratique.

Comme on peut le constater de ce qui précède, les procédés connus actuels, en particulier ceux décrits ci-avant, souffrent d'inconvénients majeurs résidant dans la demande énergétique, dans la nature des substances utilisées ou dans le fait que les oxydes sont formés in situ à partir de précurseurs, ce qui d'une part ne permet pas d'en contrôler parfaitement les caractéristiques.

D'autre part, les produits composites obtenus devraient, de manière avantageuse présenter des propriétés de revêtement identiques ou presque à celles des poudres, en particulier des oxydes qu'on y incorpore comme l'hydrophilie, la conduction électrique, l'activité catalytique, des propriétés antistatiques, la conduction ionique, la porosité contrôlée et la perméabilité contrôlée, en combinaison ou non. Les poudres revêtues sur les substrats doivent donc être le moins possible dégradées ou transformées pendant le procédé de dépôt sur le substrat. En outre, l'adhérence du revêtement sur le substrat doit être élevée et les particules de poudres appliquées pour former le revêtement doivent être dispersées uniformément sur la surface du substrat. Ce qui est parfois difficile à obtenir étant donné que souvent les matériaux pulvérulents à déposer en couche de revêtement ne présentent en effet qu'une affinité réduite pour le substrat sur lequel la couche doit être déposée et la ségrégation des matériaux à l'échelle nanométrique est souvent difficile à éviter lors des dépôts.

L'invention a pour but de pallier les inconvénients de l'état de la technique en procurant un procédé permettant de déposer des poudres en particulier des oxydes, d'une manière peu coûteuse en énergie, et ce avec des propriétés d'adhérence optimales du revêtement et une répartition homogène des particules dans le revêtement, conférant de cette façon une homogénéité des propriétés au substrat au travers du revêtement, et ce d'une manière telle que le revêtement de la poudre à appliquer conserve la nature et les propriétés de la poudre lorsqu'elle forme le revêtement.

Comme on peut le constater de ce qui précède, la poudre à appliquer pour former le revêtement au sens de la présente invention est fonctionnalisée et forme un sol colloïdal qui contient la poudre fonctionnalisée dans un solvant. L'objectif étant d'immobiliser sur le substrat des propriétés/fonctions identiques à celles qui sont présentes dans la poudre et absentes sur le substrat.

Un colloïde ou un sol colloïdal, au sens de la présente invention est une substance sous forme de liquide ou de gel qui contient en suspension colloïdale des particules suffisamment petites pour que le mélange soit homogène. Le sol colloïdal au sens de la présente invention forme une dispersion homogène de particules solides présentant une taille de particules généralement de 2 à 1000 nanomètres, de préférence de 2 à 500 nanomètres, de manière plus préférentielle de 2 à 200 nanomètres.

Pour obtenir un sol colloïdal permettant d'assurer un revêtement régulier et homogène du substrat, il y a lieu d'obtenir un sol colloïdal stable. La stabilité d'une solution colloïdale résulte de l'équilibre entre les interactions attractives et les interactions répulsives qui s'exercent sur et entre les particules et selon la présente invention, par l'utilisation spécifique d'un solvant, par exemple alcoolique, éventuellement en présence d'un agent portant une fonction carboxyle ou carboxylate. Il a été possible suivant l'invention d'obtenir un sol colloïdal stable pendant une durée d'au moins 24 heures, de préférence d'au moins 3 jours, voire plusieurs semaines ou mois, ce qui permet l'obtention d'un revêtement homogène dans lequel les particules de poudres sont parfaitement dispersées. La notion de durée de stabilité sera une fonction des oxydes utilisés. En effet, le MnO₂ a montré une stabilité de 5 mois dans le sol colloïdal selon la présente invention tandis que le LiCoO₂ montre une stabilité d'au moins 1 jour à 14 jours. La préparation des sols colloïdaux selon la présente invention permet donc l'obtention d'un sol homogène, sans ségrégation de particules nanométriques, ce qui permet de réaliser des couches homogènes du produit pulvérulent choisi. La formulation du sol est donc adaptée afin de garantir une bonne homogénéité, une capacité à pouvoir l'utiliser ensuite avec divers modes de dépôt.

En effet, la stabilité du sol colloïdal selon la présente invention permet entre autres d'utiliser de nombreuses techniques d'application comme un applicateur automatique de films comme par exemple un applicateur de revêtements à barre (bar coater), tel qu'un Elcometer 4340, éventuellement équipé d'une barre-spirale de profondeur prédéterminée, comme par exemple de 2 à 6 µm, un applicateur de revêtements par immersion (dip coater), un enducteur centrifuge (spin coater), un enducteur par pulvérisation (spray coater), un enducteur par glissement (slide coater), une imprimante sérigraphique (screen printer), un enducteur à fente (slide coater), une imprimante à jet d'encre (inkjet printer) ou encore un enducteur à rouleaux (roll coater). De cette façon, le sol colloïdal de par son homogénéité et sa stabilité peut-être appliqué de diverses manières et donc sur de nombreux substrats différents tels que des substrats de forme plane ou non, des fils, des fibres, des substrats flexibles ou encore des substrats devant encore être mis en forme puisque l'adhérence reste garantie. Ce procédé selon la présente invention permet donc de multiples fonctions envisageables, l'utilisation de multiples substrats et poudres. Le film résultant de l'application d'une ou plusieurs couches de poudre issues de l'application répétée d'une couche de sol colloïdal selon la présente invention est ensuite séché doucement à basse température et n'implique pas d'électrochimie.

Le procédé selon la présente invention est donc capable de déposer des couches de revêtements à partir de poudres, en particulier d'oxydes, sans recourir à des procédés exigeants en terme énergétique et en garantissant la pureté du dépôt réalisé conforme à celle du produit sous forme de poudre, puisqu'il ne fait pas appel à des liants susceptibles d'être retrouvés dans le revêtement dès lors que ces liants, dans le cadre de la présente invention sont éliminés dans l'étape de combustion par chauffage à une température de 50 à 500°C, dans l'étape e). Les poudres, en particulier d'oxydes dotées de propriétés particulières (par exemple catalytiques, photo-catalytiques, conductrices, colorantes) confèrent donc au substrat, par l'intermédiaire du revêtement adhérent formé, ces mêmes propriétés particulières et ce, de manière uniforme sur toute la surface du substrat revêtu. L'adhérence étant une caractéristique essentielle à la qualité du revêtement, le substrat est selon l'invention préalablement fonctionnalisé par des groupements OH issus du traitement par ledit premier solvant, alcoolique. Ladite poudre à déposer est également fonctionnalisée et forme un sol colloïdal de ladite poudre fonctionnalisée dans ledit deuxième solvant.

De plus, dans le procédé selon l'invention, le revêtement, adhérent audit substrat, est obtenu après traitement par chauffage à une température supérieure à 50°C et inférieure à 500°C, ce qui permet l'évaporation et/ou la combustion desdits solvants alcooliques et du ou des agent(s) portant une fonction carboxylique ou carboxylate, en particulier du ou des acides carboxyliques, utilisés pour former les sols colloïdaux et fonctionnaliser les surfaces et poudres. De cette façon, la pureté du revêtement est garantie, le substrat est revêtu d'un revêtement adhérent formé de poudre pure à la sortie du procédé, et ce d'autant plus qu'aucun liant n'est retrouvé dans le revêtement. Comme on le constate, le traitement thermique est une combustion, c'est-à-dire un traitement doux, ne requérant pas l'utilisation de températures dites de calcination et donc ayant un impact environnemental limité puisqu'il ne nécessite pas de fournir au dépôt de l'énergie de façon exagérée pour obtenir les propriétés liées à la température (par exemple la cristallinité ou la photoactivité induite par celle-ci).

Finalement, il faut encore pointer le fait que la succession des étapes du procédé selon la présente invention présente une cinétique compatible avec des lignes de défilement industrielles, ce qui le rend aisément adaptable sans requérir nécessairement d'équipement additionnel par rapport aux lignes de revêtement existantes.

Avantageusement, lesdites étapes c) et d) sont répétées en alternance un nombre prédéterminé de fois correspondant au nombre de couches nécessaires de ladite première poudre pour former ledit premier revêtement.

De cette façon, il est possible selon la présente invention d'obtenir un revêtement formé de plusieurs couches de sol colloïdal. La formation du revêtement formé par ledit sol colloïdal, adhérent audit substrat, par chauffage à une température supérieure à 50°C et inférieure à 500°C n'est requise qu'après un nombre prédéterminé de succession d'étapes c) et d), par exemple 10 fois. Il est donc possible d'obtenir l'épaisseur voulue du revêtement en répétant 10 fois les étapes c et d), en appliquant l'étape e) et en recommençant 10 applications des étapes c) et d) successivement avant d'opter pour une deuxième étape e), et ce jusqu'à obtention de l'épaisseur souhaitée.

Dans une autre forme de réalisation selon la présente invention, le procédé comprend en outre, les étapes de
a) fonctionnalisation d'une nième poudre (n ≥ 2) et formation d'un nième (n ≥ 2) sol colloïdal contenant ladite nième (n ≥ 2) poudre fonctionnalisée dans un Zième (Z ≥ n+1) solvant,
b) application d'au moins une couche dudit nième sol colloïdal de ladite nième poudre sur le substrat revêtu dudit (n-1)ème revêtement,
c) séchage de ladite au moins une couche dudit nième sol colloïdal et
d) éventuellement formation d'une couche de revêtement formé par ledit nième sol colloïdal de la dite nième poudre, adhérent audit (n - 1)ème revêtement, par chauffage à une température supérieure à 50°C et inférieure à 500°C.

Comme on peut le constater, le procédé selon la présente invention permet également de former un substrat muni d'un premier revêtement à partir d'une première poudre (qui peut elle-même éventuellement être un mélange de plusieurs poudres) et d'ensuite former sur ce premier revêtement un deuxième revêtement et ainsi de suite jusqu'à obtenir la succession de revêtements souhaitée. Le substrat revêtu obtenu selon la présente invention peut donc comporter un substrat revêtu d'un revêtement A, d'un revêtement B, d'un revêtement C et d'un revêtement D mais également d'un revêtement A, d'un revêtement B, d'un revêtement A et finalement d'encore un revêtement B (toute autre combinaison étant par ailleurs possible).

Avantageusement, lesdites étapes b) et c) sont répétées en alternance un nombre prédéterminé de fois correspondant au nombre de couches de ladite nième poudre pour former ledit nième revêtement.

De cette façon, il est possible selon la présente invention d'obtenir un revêtement formé de plusieurs couches du nième sol colloïdal. La formation du revêtement formé par ledit sol colloïdal, adhérent audit substrat, par chauffage à une température supérieure à 50°C et inférieure à 500°C n'est requise qu'après un nombre prédéterminé de successions d'étapes b) et c), par exemple 10 fois. Il est donc possible d'obtenir l'épaisseur voulue du revêtement en répétant 10 fois les étapes b et c), en appliquant l'étape d) et en recommençant 10 applications des étapes b) et c) successivement avant d'opter pour une deuxième étape d), et ce jusqu'à obtention de l'épaisseur souhaitée. Dans une variante, on peut appliquer plusieurs fois les étapes b) et c) avec la première poudre et plusieurs fois les étapes b) et c) avec la nième poudre et seulement ensuite former un revêtement formé par ledit sol colloïdal, adhérent audit substrat, par chauffage à une température supérieure à 50°C et inférieure à 500°C.

Dans certains cas, ledit premier et/ou ledit nième sol colloïdal contient de l'eau.

De préférence, ladite nième poudre est une poudre comprenant un oxyde d'alcalin, un oxyde d'alcalino-terreux, un oxyde de métal de transition, un oxyde de métal pauvre, un oxyde de métalloïde, un oxyde de lanthanide, un oxyde d'actinide, de préférence, un oxyde métallique et/ou un oxyde de silicium , de manière plus préférentielle comprenant un ou plusieurs oxydes choisi(s) dans le groupe des oxydes de lithium, de sodium, de cérium, de titane, de vanadium, de chrome, de molybdène, de manganèse, de fer, de cobalt, de nickel, de palladium, de cuivre, de zinc, de cadmium, d'aluminium, de silicium, d'étain et de plomb et de leurs combinaisons, telles que les oxydes mixtes de cobalt et de lithium, de fer et de manganèse, de lithium et de titane.

Dans une forme de réalisation avantageuse de la présente invention, ledit substrat est choisi dans le groupe constitué d'un métal, du verre ou du quartz, d'un support céramique, de tout autre matériau revêtu de dioxyde de titane ou d'oxyde de silicium, de préférence un métal, un support céramique ou tout autre matériau revêtu de dioxyde de titane ou d'oxyde de silicium dès lors que ces substrats sont particulièrement difficiles à revêtir avec des oxydes, surtout lorsqu'il est souhaitable que l'oxyde soit uniformément réparti et conserve ses propriétés de départ

De préférence ledit métal est choisi dans le groupe constitué de l'acier, en particulier de l'acier à bas, moyen ou haut carbone, laminé, revêtu ou non, mis en forme ou non, de l'acier inoxydable plat ou mis en forme, du platine, éventuellement déposé sur un autre support, de l'aluminium, laminé ou non, éventuellement mis en forme, plus particulièrement, ledit métal est choisi dans le groupe de l'acier revêtu en feuille, de l'acier pré-peint, de l'aluminium en feuille ou de l'acier revêtu d'une couche de dioxyde de titane.

Avantageusement, ledit verre ou quartz est choisi dans le groupe constitué du verre contenant des alcalins ou non, plat ou mis en forme tel qu'en forme de tube, de fils ou de fibres, du quartz sous forme de feuille, de tube, de fils ou encore de fibres.

Avantageusement, ledit premier et/ou ledit nième sol colloïdal est formé en présence d'un agent portant une fonction carboxyle ou carboxylate.

Plus particulièrement, ladite étape de fonctionnalisation (étapes a et b) de ladite première poudre avec formation dudit premier sol colloïdal contenant ladite première poudre fonctionnalisée comprennent les étapes suivantes :
a) préparation d'une première solution S1 dudit agent portant une fonction carboxyle ou carboxylate dans ledit deuxième solvant SO1, lequel est choisi parmi les alcools organiques à chaîne linéaire, saturée ou insaturée, comprenant au moins une fonction alcool,
b) préparation d'une suspension Sp1 par dispersion de ladite première poudre dans ladite première solution S1,
c) addition d'eau à ladite première solution S1 pour former une solution diluée S1d,
d) mélange de ladite solution S1d diluée et de ladite suspension Sp1 à une température comprise entre 10°C et la température de reflux dudit deuxième solvant et
e) homogénéisation dudit mélange, jusqu'à obtention dudit premier sol colloïdal contenant ladite première poudre fonctionnalisée.

Avantageusement, l'homogénéisation peut éventuellement être améliorée par ultrasons. Ladite poudre à déposer est donc fonctionnalisée par l'intermédiaire dudit deuxième solvant alcoolique et d'autre part par l'intermédiaire dudit agent portant une fonction carboxyle ou carboxylate tout en permettant la formation d'un sol colloïdal stable SOL1.

De plus, dans une forme de réalisation particulière, ladite étape de fonctionnalisation (étapes a et b) de ladite nième poudre (n ≥ 2) avec formation d'un nième (n ≥ 2) sol colloïdal contenant ladite nième poudre (n ≥ 2) fonctionnalisée, comprennent les étapes suivantes :
a) préparation d'une nième (n ≥ 2) solution Sn dudit agent portant une fonction carboxyle ou carboxylate dans ledit Zième (Z ≥ n+1) solvant SO2, lequel est choisi parmi les alcools organiques, à chaîne linéaire, saturée ou insaturée, comprenant au moins une fonction alcool
b) préparation d'une suspension Spn par dispersion de ladite nième poudre (n ≥ 2) poudre dans ladite nième (n ≥ 2) solution Sn,
c) addition d'eau à ladite nième (n ≥ 2) solution Sn pour former une nième (n ≥ 2) solution diluée Snd,
d) mélange de ladite nième (n ≥ 2) solution diluée Snd et de ladite suspension Spn à une température comprise entre 10°C et la température de reflux dudit Zième (Z ≥ n+1) solvant alcoolique et
e) homogénéisation dudit mélange jusqu'à obtention dudit nième (n ≥ 2) sol colloïdal contenant ladite nième poudre (n ≥ 2) fonctionnalisée.

L'homogénéisation peut éventuellement être améliorée par ultrasons. Dans ce cas également ladite poudre à déposer est fonctionnalisée par l'intermédiaire dudit Zième solvant alcoolique et d'autre part pour ledit apport d'agent portant une fonction carboxyle ou carboxylate un groupe carboxylique qui en plus permette par la formation d'un sol colloïdal stable SOLn.

Avantageusement, dans une variante selon l'invention, ladite première poudre est fonctionnalisée dans un solvant de fonctionnalisation Sf, éventuellement en présence d'eau afin de réaliser une fonctionnalisation préalable de la poudre à déposer avant de former le sol colloïdal par les étapes suivantes :
a) préparation d'une suspension Sp1 par dispersion de ladite première poudre fonctionnalisée dans ledit deuxième solvant SO₁
b) addition d'eau audit deuxième solvant SO₁ pour former une solution diluée S₁d
c) mélange de ladite solution diluée S₁d et de ladite suspension Sp1 à une température comprise entre 10°C et la température de reflux dudit deuxième solvant SO1,
d) homogénéisation dudit mélange jusqu'à obtention d'un sol colloïdal intermédiaire contenant ladite première poudre fonctionnalisée et,
e) une addition audit sol colloïdal intermédiaire d'une solution contenant un agent portant une fonction carboxyle ou carboxylate dans un troisième solvant, de préférence alcoolique pour former ledit premier sol colloïdal SOL1.

Dans une autre variante, ladite nième poudre (n ≥ 2) est fonctionnalisée dans un solvant de fonctionnalisation Sf, éventuellement en présence d'eau, afin de réaliser une fonctionnalisation préalable de la poudre à déposer avant de former le sol colloïdal par les étapes de
a) préparation d'une suspension Spn par dispersion de ladite nième poudre (n ≥ 2) dans ledit Zième (Z ≥ n+1) solvant (SOZ)
b) addition d'eau audit Zième solvant (Z ≥ n+1) pour former une solution diluée Snd
c) mélange de ladite solution diluée Snd et de ladite suspension Spn à une température comprise entre 10°C et la température de reflux dudit Zième solvant (Z ≥ n+1)
d) homogénéisation dudit mélange jusqu'à obtention d'un sol colloïdal intermédiaire d'une solution contenant ladite nième poudre fonctionnalisée
e) une addition audit sol colloïdal intermédiaire d'une solution contenant un agent portant une fonction carboxyle ou carboxylate dans un troisième solvant, de préférence alcoolique pour former ledit nième sol colloïdal SOLn.

Dans une forme de réalisation particulièrement préférentielle de la présente invention, ledit premier solvant alcoolique, ledit deuxième solvant, ledit troisième solvant et ledit Zième (Z ≥ n+1) solvant sont choisis indépendamment l'un de l'autre dans le groupe constitué de l'eau et des alcools organiques, à chaîne linéaire, saturée ou insaturée, comprenant au moins une fonction alcool, et de préférence choisi dans le groupe du méthoxyéthanol, de l'éthanol, de l'éthylène glycol, du 1-propanol, du méthanol, du n-butanol, du 2-phényléthanol et du 2-propanol et leurs mélanges et peuvent être identiques ou différents.

Dans une variante avantageuse suivant l'invention, ledit premier solvant alcoolique comprend un additif, de préférence choisi dans le groupe de l'éthylène glycol, du polyéthylène glycol 200, du polyéthylène glycol 400, du polyéthylène glycol 1500, du polyéthylène glycol 10000 et du polyéthylène glycol 1500000, des alcools gras naturels éthoxylés, de préférence à base d'alcool de stearyle, plus particulièrement du Brij® S10, du pluronic F127®, du sulfonate sodique de dodécylbenzène et de l'acide 4-hydroxybenzoïque ainsi que de leurs mélanges.

Suivant un mode de réalisation préférentiel, ledit solvant de fonctionnalisation est choisi dans le groupe constitué de l'éthylène glycol, du polyéthylène glycol 200, du polyéthylène glycol 400, du polyéthylène glycol 1500, du polyéthylène glycol 10000 et du polyéthylène glycol 1500000, des alcools gras naturels éthoxylés, de préférence à base d'alcool de stearyle, plus particulièrement du Brij® S10, du pluronic F127®, et du sulfonate sodique de dodécylbenzène, l'acide para-hydroxybenzoïque, ainsi que de leurs mélanges.

De manière préférentielle, ledit agent portant une fonction carboxyle ou carboxylate est un acide carboxylique ou le carboxylate associé choisi dans le groupe des acides carboxyliques monofonctionnels ou polyfonctionnels, possédant éventuellement des chaînes alcool et/ou éventuellement des cycles benzéniques et/ou possédant des chaînes carbonées saturées ou insaturées, de préférence, ledit agent portant une fonction carboxyle ou carboxylate est de l'acide 4-hydroxybenzoïque.

De manière avantageuse, ledit agent portant une fonction carboxyle ou carboxylate est un acide aminé carboxylique, en particulier de la tyrosine.

D'autres formes de réalisation du procédé suivant l'invention sont indiquées dans les revendications annexées.

En particulier, le matériau obtenu par le procédé selon la présente invention comprends un substrat et au moins un revêtement à base de poudre caractérisé en ce que ledit revêtement est constitué de ladite poudre et présente une adhérence audit substrat supérieure à 17N/mm2 selon la norme ASTM 4541.

Avantageusement, le matériau obtenu par le procédé selon la présente invention comporte un nième revêtement (n ≥ 2) à base d'une nième poudre, dans lequel ledit nième revêtement est constitué de ladite nième poudre.

D'autres caractéristiques, détails et avantages de l'invention ressortiront de la description donnée ci-après, à titre non limitatif et en faisant référence aux dessins annexés et aux exemples ci-dessous.
La figure 1a est un diagramme bloc illustrant un mode de réalisation du procédé selon la présente invention.
La figure 1b est un diagramme bloc illustrant un mode avantageux de réalisation du procédé selon la présente invention.
La figure 2 illustre la caractérisation de la poudre obtenue à l'exemple 1 par TEM (Microscopie à Transmission d'Electrons) et par DRX (Diffraction des Rayons X).
La figure 3 illustre la caractérisation par DRX du revêtement obtenu sur le substat à l'exemple 1 en comparaison avec la poudre caractérisée à la figure 2.
La figure 4 illustre la caractérisation élémentaire par EDX (Energy Dispersive X Ray spectroscopy) du revêtement obtenu sur le substrat à partir de la poudre caractérisée à la figure 2.
La figure 5 illustre la cartographie EDX du revêtement de la figure 3 obtenu sur le substat à partir de la poudre caractérisée à la figure 2.
La figure 6 illustre les résultats de l'analyse par TG-DSC (Thermogravimétrie - Calorimétrie Différentielle à Balayage) du revêtement de la figure 3 obtenu sur le substrat à partir de la poudre caractérisée à la figure 2 ainsi qu'une analyse de la poudre caractérisée à la figure 2.
La figure 7 compare le taux de dégradation à basse température d'une molécule organique (acide gras) représentative de constituants alimentaires en présence d'un substrat nu ou recouvert d'un revêtement de la figure 3 obtenu sur le substat à partir de la poudre caractérisée à la figure 2
La figure 8 illustre la caractérisation par DRX du produit de réaction (MnO₂ poudre) de l'exemple comparatif 2.
La figure 9 illustre les profils de diffraction (DRX) du film de (MnO₂ ramsdellite) R-MnO₂ après séchage de l'exemple comparatif 3.
Les figures 10a et 10b montrent le profil de diffraction (DRX) et la photo SEM, respectivement, du revêtement de trois couches obtenu par dip-coating à l'exemple comparatif 6.
Les figures 11a et 11b comparent la photo de plaques d'ALUSI® avant (fig 11b) et après (fig 11a) le spin-coating d'un sol de LiCoO₂ et calcination à 500°C pendant 1h00 de l'exemple 4.
Les figures 12a et 12b comparent la photo d'une des plaques se Pt°/Si après spin-coating d'un sol de LiCoO₂ et calcination à 500°C pendant 1h00 selon l'exemple 5.
La figure 13 montre les profils de diffraction des rayons -X aux angles rasants DRX des plaques de platine avant l'application de colloïde de LiCoO₂-C, selon l'exemple 5.
La figure 14 montre les profils de diffraction des rayons-X des plaques de platine après l'application du spin-coating du système LiCoO₂-C et calcination selon l'exemple 5.

Sur les figures, les éléments identiques ou analogues portent les mêmes références.

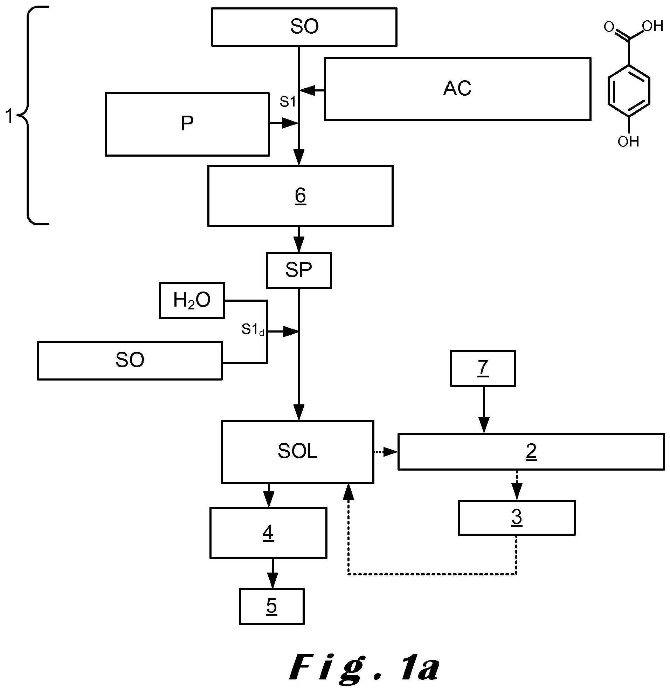

Comme on peut le voir à la figure 1a, la présente invention concerne donc un procédé de fabrication d'un matériau composite comprenant un substrat et un revêtement à base de poudre. La première étape de ce procédé réside dans une fonctionnalisation du substrat (étape 7). Le substrat est d'abord dégraissé par un dégraissant industriel commercial comme par exemple par le dégraissant Chemetall Gardoclean S5183. Le substrat est ensuite lavé à l'eau avant d'être traité par un solvant alcoolique et éventuellement de l'eau éventuellement mélangée à un acide carboxylique. Le solvant alcoolique SOA utilisé est un alcool choisi parmi les alcools organiques à chaine linéaire, saturée ou non et muni d'au moins une fonction alcool, plus particulièrement ceux comportant un groupe éthanol et plus particulièrement l'éthanol.

Le substrat est ensuite séché à l'air sec, de préférence, à une température comprise entre 60 et 150 °C. Le traitement de surface du substrat correspond à une première fonctionnalisation de surface qui permettra de venir y greffer les molécules choisies et permet donc l'obtention d'une surface réactive qui pourra réagir ensuite avec le sol colloïdal formé.

Comme on peut le voir à la figure 1a, le procédé selon la présente invention comprend également une fonctionnalisation (1) d'une poudre par l'ajout d'au moins un agent portant une fonction carboxyle ou carboxylate et d'un deuxième solvant alcoolique et éventuellement de l'eau à ladite poudre pour obtenir une suspension (SP).

De préférence, le premier sol colloïdal SOL1 est préparé de la manière suivante. Une première poudre P1 est choisie en fonction des propriétés recherchées pour le revêtement dudit substrat. Comme mentionné, cette poudre P1 est une poudre d'oxyde, de mélange d'oxydes ou d'oxydes mixtes de nature identique ou non.

Une solution S1 contenant un mélange de solvant alcoolique (appelé précédemment deuxième solvant alcoolique) SO1 et d'acide carboxylique mono ou multi fonctionnel AC1 ou d'un carboxylate est préparée. La concentration en acide carboxylique dans le solvant alcoolique est de 0,001 à 2 g/L.

La poudre P1 est ensuite dispersée dans la solution S1 à raison d'une concentration comprise dans la plage allant de 1 à 10 g/L, voir plus dès lors qu'au-delà de 10g/L la solution est saturée, et la dispersion obtenue est homogénéisée (6) par ultrasons pendant une période de temps de 15 min à 60 min et sous agitation à une vitesse comprise entre 100 tours par minute et 5000 tours par minute. La dispersion ainsi homogénéisée est appelée suspension Sp1. Le rapport molaire AC1/P1 est compris dans la suspension Sp1 entre 0,001 et 1.

Une addition d'eau à la solution S1 est réalisée pour atteindre une concentration en eau de 1 à 50 g/L. La solution S1 ainsi diluée (S1d) est mélangée avec la suspension Sp1 à une température comprise entre 10°C et la température de reflux du solvant SO1 et homogénéisée par ultrasons pendant une période de temps de 15 min à 96 heures et sous agitation à une vitesse comprise entre 100 tours par minutes et 5000 tours par minutes pour former le sol colloïdal SOL 1. Le sol colloïdal SOL1 est ensuite laissé à décanter pendant une période de temps comprise entre 1 et 16 h.

Le deuxième solvant alcoolique SO1 est un alcool choisi dans le groupe des alcools organiques à chaîne linéaire, saturée ou non et muni d'au moins une fonction alcool, de l'éthylène glycol et est, de préférence, sans toutefois y être limité, du méthoxyéthanol.

L'agent portant une fonction carboxyle ou carboxylate est un acide carboxylique AC1 choisi dans le groupe des acides carboxyliques mono ou poly fonctionnels, possédant ou non des fonctions alcools, possédant ou non des cycles benzéniques, et possédant ou non des chaînes carbonées saturées et est de préférence, sans toutefois y être limité de l'acide para-hydroxybenzoïque.

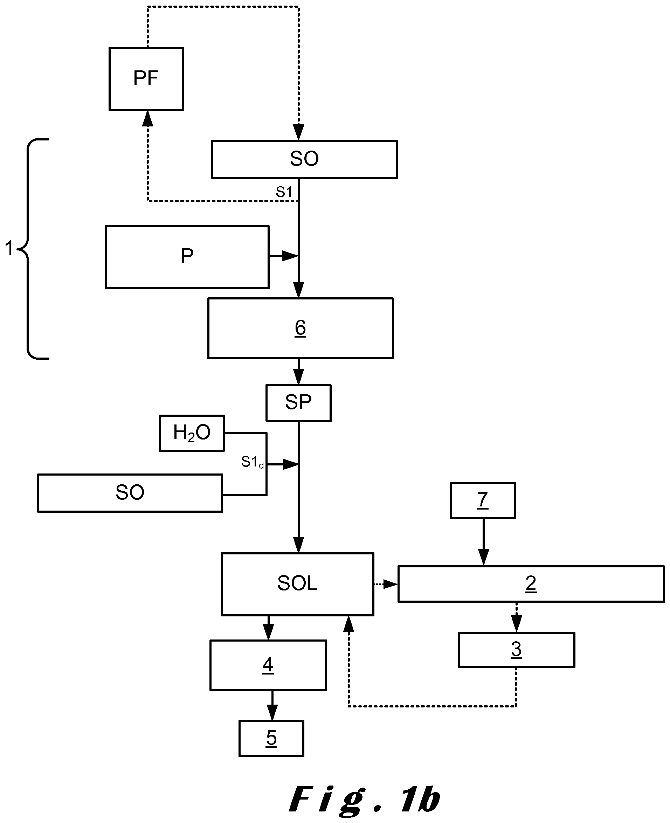

La figure 1b comprend toutes les étapes de procédé qui ont été décrites pour la figure 1a excepté que ce mode de réalisation avantageux comprend en outre une préfonctionnalisation (PF) de la poudre. La préfonctionnalisation est réalisée dans un solvant de pré-fonctionnalisation avant de réaliser le sol colloïdal (SOL1). L'étape de préfonctionnalisation (PF) est de manière avantageuse répétée à une ou plusieurs reprise(s) de façon à obtenir une poudre suffisamment fonctionnalisée. La solution de fonctionnalisation utilisée ultérieurement (1) est préférentiellement de nature identique ou différente de celle utilisée lors de la première fonctionnalisation et peut éventuellement contenir de l'eau. De manière avantageuse, lorsque l'étape de préfonctionnalisation comprend l'ajout d'un agent portant une fonction carboxyle ou carboxylate à la poudre, l'étape de fonctionnalisation ultérieure ne nécessite pas l'utilisation d'au moins un agent portant une fonction carboxyle ou carboxylate, en particulier un acide carboxylique, pour fonctionnaliser la poudre.

La préfonctionnalisation (PF) consiste à pré-fonctionnaliser la poudre avec un premier solvant puis éventuellement avec un second solvant. Ensuite, une filtration est réalisée et le solide ainsi obtenu est séché et forme la poudre P1 qui dans ce cas est préfonctionnalisée.

Comme on peut le voir aux figures 1a et 1b, qui décrivent identiquement les étapes ultérieures du dépôt de revêtement sur le substrat, une première poudre P1 est choisie et dispersée dans une solution de fonctionnalisation S1 contenant un solvant de fonctionnalisation et éventuellement de l'eau. La poudre P1 dispersée dans la solution S1 est homogénéisée par ultrasons pendant une période de temps de 15 à 60 minutes et sous agitation à une vitesse de 100 à 5000 tours par minutes pendant 24 heures (=suspension Sp1). Ensuite, la poudre a été récupérée par filtration et rincée à l'eau avant d'être séchée. Ce solide est la poudre P1 fonctionnalisée.

La poudre P1 fonctionnalisée est ensuite dispersée dans ledit deuxième solvant à raison d'une concentration allant de 1 à 10 g/L. La dispersion obtenue est homogénéisée par ultrasons pendant une période de temps de 15 à 96 heures et sous agitation à une vitesse comprise entre 100 et 5000 t/min.

La dispersion ainsi homogénéisée est appelée Sp1.

Une addition d'eau audit deuxième solvant SO1 a alors également été réalisé pour former une solution diluée S1d.

S1d est ainsi mélangée à Sp1 à une température comprise entre 10°C et la température de reflux du solvant SO1 et homogénéisée par ultrasons pendant une période de temps de 15 min à 240 min et sous agitation à une vitesse comprise entre 100 tours par minutes et 5000 tours par minutes pour former un sol colloïdal intermédiaire qui est ensuite laissé à décanter pendant une période de temps comprise entre 1 et 16 h.

Finalement, une solution contenant un agent portant une fonction carboxyle ou carboxylate, en particulier un acide carboxylique AC1, dans un solvant alcoolique est ajoutée au sol colloïdal intermédiaire pour former ledit SOL1.

Le sol colloïdal ainsi formé est ensuite appliqué à l'aide de techniques de revêtement conventionnelles (2) telles qu'une enduction par immersion, à l'aide d'une barre éventuellement spiralée, par vaporisation, par centrifugation et analogue. La couche de sol colloïdal appliquée est ensuite séchée par chauffage à basse température (3), c'est-à-dire, par exemple, par passage au four pour évaporer une partie du solvant, éventuellement en présence d'eau pendant une période de temps de 5 s à 5 h, mais, plus particulièrement pendant une période de temps de 5 s à 0,5 h avec une préférence pour la période de temps s'étalant de 5 s à 5 min à une température comprise entre 50 et 190°C, plus particulièrement entre 60 et 110°C et de façon préférentielle entre 75 et 90°C, ceci à une pression absolue comprise entre 0,05 et 15 bar, plus particulièrement, entre 0,5 et 2,5 bar et de façon préférentielle entre 0,7 et 1,3 bar, avant d'éventuellement en appliquer une autre, si c'est nécessaire. Lorsque plusieurs couches sont nécessaires, une deuxième, puis une troisième couche de sol colloïdal et ainsi de suite est appliquée et à chaque fois séchée avant application de la suivante.

Après un nombre prédéterminé de couches appliquées, (successives du même produit ou successives de produits différents), une première couche de revêtement formé par ledit sol colloïdal, adhérent au substrat, est formée (5) par chauffage (4) à une température supérieure à 50°C et inférieure ou égale à 500°C, plus particulièrement comprise entre 150 et 500°C avec une préférence pour la gamme de températures de 285 à 415°C, de préférence entre 300 et 350 °C. La période de temps du traitement thermique est généralement comprise entre 5 s et 5 h, plus particulièrement entre 5 s et 0,5 h et de manière préférentielle, entre 5 s et 5 min. Si nécessaire, au-dessus de la première couche de revêtement, d'autres couches de sol colloïdal sont appliquées, comme décrit précédemment. Les autres couches de sol colloïdal appliquées peuvent être composées de la même poudre, ou d'une autre poudre.

Les temps de réaction impliqués pendant la phase de revêtement et les temps de séchage impliqués permettent d'envisager sans aucune réserve une industrialisation de ce procédé.

### EXEMPLES

### EXEMPLE 1.-

Dépôt d'une couche mince de dioxyde de manganèse de structure ramsdellite (MnO₂-R) sur un substrat en acier laminé, recouvert d'un revêtement d'aluminium et de silicium (ALUSI).

L'objectif du dépôt de cette couche mince de ramsdellite est de produire une surface catalytique active sous l'effet conjugué de la lumière et de la chaleur.

Des nanoparticules d'oxyde de manganèse (MnO₂-R) ont été synthétisées à partir de KMnO₄ et MnSO₄.H₂O en suivant le protocole proposé par Portehault et coll, Chem Mater 19 (2007) p. 5410-5417.

L'immobilisation de MnO₂-R a été effectuée sur des lames d'acier du type ALUSI® de différentes dimensions en cm : 2×8, 10×10 et 21×29.7 cm².

Avant leur utilisation, toutes les lames ALUSI® ont été dégraissées avec le Gardoclean S5183 de Chemetal, lavées (H₂O, éthanol) et séchées à 120°C (1 h).

Une solution S1 d'acide carboxylique a été préparée en mélangeant 0,5 g d'acide 4-hydroxybenzoïque dans 500 mL de 2-methoxyéthanol. À partir de S1, un deuxième mélange a été préparé en ajoutant 0,75mL d'eau déionisée dans 30 mL de S1, ce mélange aqueux forme une solution S1 diluée

Ensuite, 0,3 g de dioxyde de manganèse (MnO₂-R) ont été mis en suspension et dispersés dans 30 mL de la solution S1 par ultrasons (30 min) et par agitation (1500 rpm, pendant 2 h) (suspension Sp1). A cette suspension, 30 mL de la solution S1 diluée ont été ajoutés, la solution a ensuite été homogénéisée par ultrasons pendant 30 min et agitée pendant 2 h.

Pendant ce temps on observe la formation d'une phase colloïdale (noire), le solide en excès a été laissé à décanter pendant 16 h, cette solution colloïdale est désignée comme SOL1.

Immobilisation de MnO₂-R sur ALUSI®

Les lames d'acier fonctionnalisées, obtenues ci-dessus sont placées dans l'applicateur automatique de films. On dépose sur les lames un volume spécifique de la solution SOL1. Le volume déposé change en fonction des dimensions de la plaque: il est de 0,125 mL, de 0,580 mL, de 1,200 mL pour les lames (en cm) : 2x8, 10×10 et 21×29.7 cm², respectivement.

Une première couche de la solution colloïdale SOL1 est appliquée sur les lames. Les lames sont alors séchées à 80°C sous flux d'air pendant 1 h. Ensuite, ce protocole d'application et de séchage à 80°C est répété jusqu'à la formation de 10 couches. Finalement, les lames sont traitées thermiquement à 500 °C (avec une rampe de chauffe de 20 °C/min) sous flux d'air (pendant 1 h).

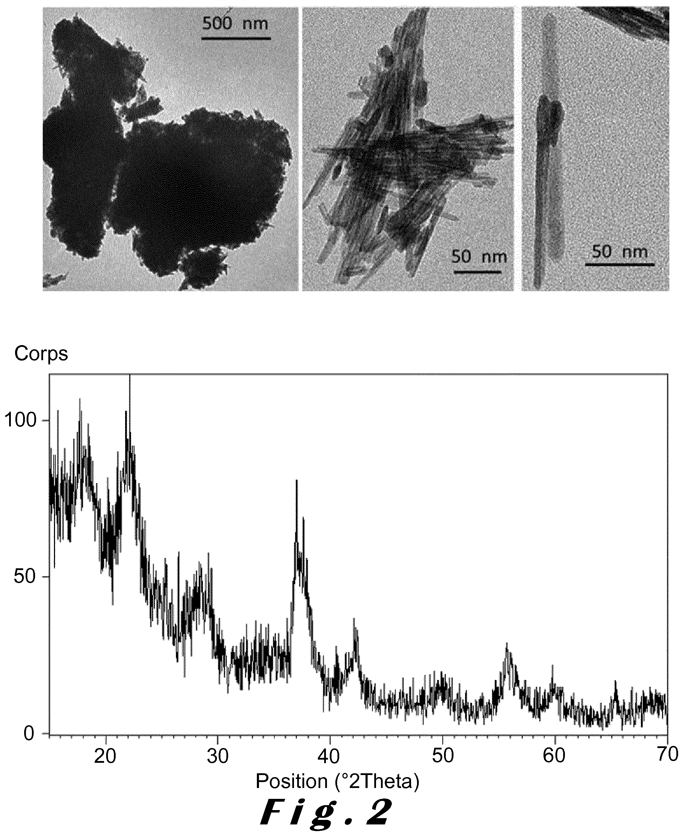

La caractérisation de la poudre par DRX (voir figure 2) permet de vérifier que la poudre de départ est bien de la ramsdellite. Une autre caractérisation par TEM permet de définir la taille nanométrique des particules isolées de la poudre (de l'ordre de 10 à 30 nm de large sur une longueur de 50 à 120 nm) (figure 2).

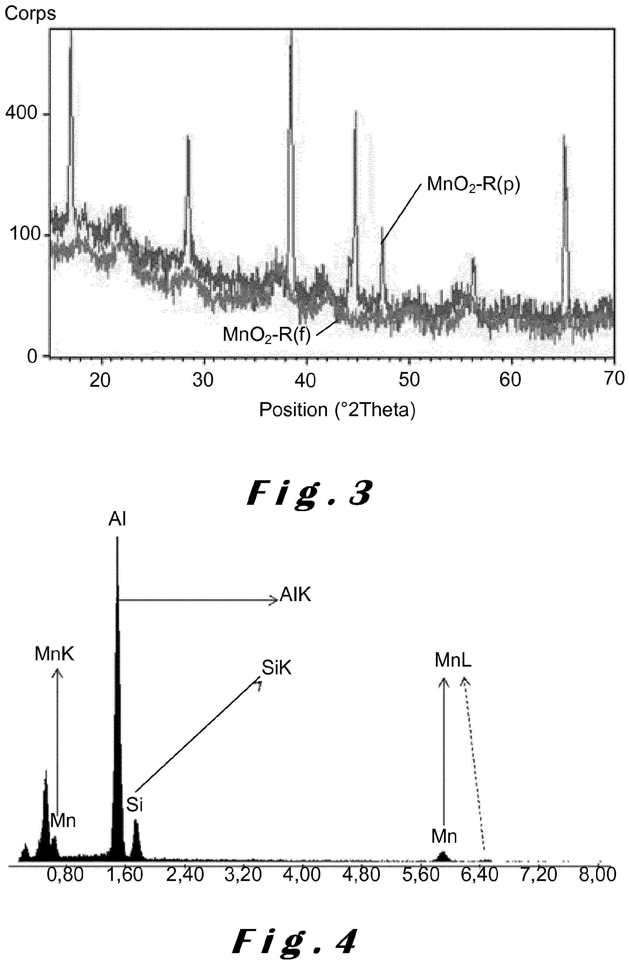

La caractérisation par DRX du revêtement sur le substrat permet de vérifier que les pics présents (voir figure 3) sur le diffractogramme correspondent à la poudre (illustrée à la figure 1) et au substrat, ce qui prouve la capacité du procédé qui fait l'objet de l'invention de permettre de déposer sans contamination une poudre pure sur un substrat (figure 3).

La caractérisation par EDX du substrat et de la couche permet de valider à nouveau la pureté du dépôt et l'absence de toute pollution venant des composés de la synthèse (figure 4).

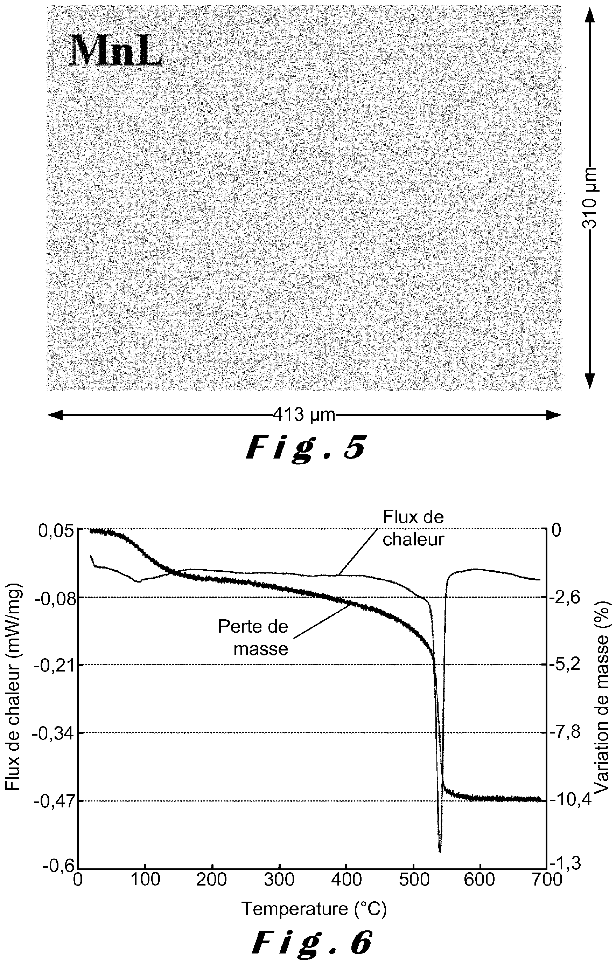

La caractérisation par cartographie EDX permet en outre de valider l'homogénéité du dépôt à l'échelle micrométrique (figure 5).

La caractérisation par TG-DSC du dépôt préparé selon le procédé selon l'invention permet de valider que les signaux du revêtement et de la poudre initiale sont bien les mêmes et qu'ils ne sont pas altérés par les produits utilisés pour aider au dépôt de couche mince. Ainsi, ceci valide à nouveau que le dépôt est pur.

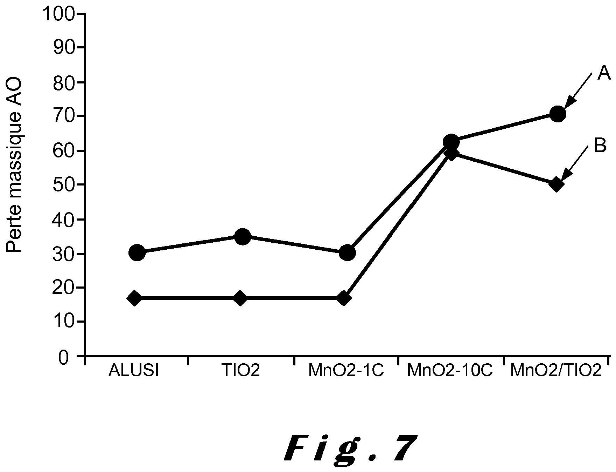

Par ailleurs, la cible ici étant de former une couche catalytique active sous l'effet conjugué de la lumière et de la chaleur, on peut constater, à la figure 7, l'effet positif de la couche de MnO₂-R qui permet de doper d'un facteur supérieur à 4 la vitesse de dégradation d'un polluant organique caractéristique des déchets alimentaires.

L'adhérence de la couche ainsi formée est évaluée par différents tests tels que le test de l'adhésif, la résistance au trempage dans l'eau et l'acétone, le lavage à l'éthanol, le test du frottement à sec, le pliage du substrat, le test calorifique pour mesurer la perte de matière à 250 °C et à 500°C et la résistance aux UV/visible dans l'eau.

Le test de l'adhésif consiste à utiliser un adhésif de marque Scotch® disponible auprès de la société 3M, que l'on appose sur le revêtement et que l'on retire. On évalue ensuite sur la partie transparente de l'adhésif par une inspection visuelle la quantité de matériau décollée.

La résistance au trempage dans l'eau et dans l'acétone consiste à plonger pendant une durée de 24 heures le substrat revêtu de la poudre dans de l'eau ou dans de l'acétone. Le produit plongé dans l'eau ou dans l'acétone est alors visuellement comparé à un produit non trempé.

Le test du lavage à l'éthanol consiste à plonger dans une solution d'éthanol, sous agitation entre 50 et 100 tours par minutes, sans frotter le substrat recouvert de la couche d'oxyde pendant une durée 24 heures. Une évaluation visuelle est alors pratiquée pour détecter si des parties du revêtement se sont décrochées du substrat.

Le test du frottement à sec consiste à effectuer 100 aller-retour avec un chiffon sec de marque TORK. Une inspection visuelle du chiffon et du substrat revêtu permet d'évaluer la mesure de l'adhérence du revêtement.

Le test calorifique pour mesurer la perte de matière à 250 °C et à 500°C consiste à porter le substrat recouvert de la couche d'oxyde à une température de 250 et 500 °C. La perte de matière est alors évaluée de manière qualitative.

Le test de la résistance aux UV/visible dans l'eau consiste à placer le substrat recouvert de la couche d'oxyde sous rayonnement UV/Visible dans l'eau pendant 24 h. On pratique ensuite une inspection visuelle de la dégradation de la surface.

Le substrat ainsi revêtu de la couche d'oxyde a montré que l'adhérence était satisfaisante dans la mesure où l'échantillon satisfaisait l'ensemble des tests ci-dessus. Finalement les échantillons obtenus selon l'exemple 1 ont été soumis à un test de pellabilité du revêtement suivant la norme ASTM 4541.

Des corps d'essai en acier (surface 3,1 cm²) sont collés au moyen d'un adhésif époxy sans solvant à 2 composants du type séchage lent aux deux plaques d'acier revêtues selon l'exemple 1.

La force de traction est appliquée perpendiculairement à la surface.

Après rupture le type de celle-ci est évalué et la grandeur de la force est notée au tableau 1 repris ci-dessous.

**Tableau 1.-**

| **Mesure** | **Plaque A (N/mm²)** | **Plaque B (N /mm²)** |
|---|---|---|
| 1 | 18,71 | 17,66 |
| 2 | 17,45 | 15,74 |
| 3 | 17,72 | 17,35 |
| 4 | 16,29 | 16,76 |
| 5 | 17,45 | 16,50 |
| **Moyenne** | **17,52** | **16,80** |
| Nature de la rupture | Rupture adhésive entre colle et revêtement | Rupture adhésive entre colle et revêtement |

Comme on peut le constater, l'adhérence du revêtement est plus élevée que celle obtenue par l'adhésif époxy à 2 composantes.

### EXEMPLE 2.- :

Dépôt d'une couche de dioxyde de manganèse (ramsdellite) sur un substrat en aluminium.

Une poudre de dioxyde de manganèse est synthétisée selon la procédure décrite à l'exemple 1.

Cette poudre est ensuite mise en solution colloïdale en la mélangeant selon la procédure reprise à l'exemple 1 et le substrat est également traité de la même manière que celle décrite à l'exemple 1.

Les tests de vérification de la nature du revêtement ont conduit aux conclusions que la poudre était pure et dispersée de manière homogène à la surface dudit substrat. De plus les différents tests d'adhérence réalisés ont montré que l'adhérence du revêtement recuit était satisfaisante.

### EXEMPLE 3.- :

Dépôt d'une couche de dioxyde de manganèse (ramsdellite) sur un substrat en acier revêtu de dioxyde de titane.

Un film de dioxyde de titane est déposé par dip coating à base d'un sol synthétisé par modification d'une méthode décrite dans Microporous and Mesoporous Materials 122 (2009) 247-254

L'acier a été donc préalablement recouvert de dioxyde de titane et a ensuite été utilisé comme substrat pour l'exemple 3. Le protocole reproduit est celui de l'exemple 1.

Les tests de vérification de la nature du revêtement ont conduit aux conclusions que la poudre était pure et dispersée de manière homogène à la surface dudit substrat. De plus les différents tests d'adhérence réalisés ont montré que l'adhérence du revêtement recuit était satisfaisante.

### EXEMPLE 4.-

Dépôt d'une couche mince d'oxyde de cobalt(III) et lithium commercial (LiCoO₂-C) sur un substrat en acier laminé, recouvert d'un revêtement d'aluminium et de silicium (ALUSI).

L'oxyde de cobalt et lithium (LiCoO₂-C) a été acheté chez Aldrich Chemistry (lot#MKBF6341V). L'immobilisation du LiCoO₂-C a été effectuée sur des lames d'acier du type ALUSI® de dimensions: 2x2 cm².

Avant leur utilisation, toutes les lames ALUSI® ont été dégraissées, lavées (H₂O, éthanol) et séchées à 120°C (1 h).

### Etape de pré-fonctionnalisation de LiCoO₂-C :

Une solution de fonctionnalisation aqueuse Sf d'acide carboxylique a été préparée en mélangeant 1,0 g d'acide 4-hydroxybenzoïque dans 200 mL de H₂O désionisée. Ensuite, 4,0 g de LiCoO₂-C ont été mis en suspension et dispersés dans 150 mL de la solution Sf par ultrasons (30 min) et par agitation (1500 tours/minutes, pendant 24 h) (suspension Sfp1). Finalement, la suspension Sfp1 été filtrée et le solide a été lavé avec de l'eau désionisée (450 mL) et séchée pendant 24 heures á 80 °C. Ce solide fonctionnalisé et sec sera nommé ci-dessous LiCoO₂-C/F.

### Etape de formation d'un sol colloïdal

Ensuite, 0,5 g de LiCoO₂-C/F ont été mis en suspension et dispersés dans 50 mL d'éthanol (Sp1). La dispersion a été effectuée par ultrasons (30 min) et par agitation (1500 tours/minutes, pendant 2 h) (suspension Sp1). A Sp1 ont été ajoutés un mélange (Sd1) de 50 mL d'éthanol (S1) et 1,25 mL d'eau désionisée), la solution a ensuite été ultrasoniquée pendant 3 h et agitée pendant 1 h. Pour séparer le solide en excès de la solution colloïdale, la suspension a été laissée à décanter pendant 16 h et centrifugée à 5000 tours/minutes pendant 15 min (15 °C).

Finalement, à 20 mL de la solution colloïdale résultante ont été ajoutés 2 mL d'une solution d'acide 4-hydroxybenzoïque dans 2-methoxy-ethanol (10 g/L), cette solution colloïdale est désignée comme SOL1.

### Immobilisation de LiCoO₂-C sur ALUSI

Les lames d'acier préparées, obtenues ci-dessus sont placées sur le spin-coater. Une première couche de la solution colloïdale est appliquée sur les lames en déposant entre 15 et 20 µL de la solution SOL1. Ensuite le spin-coating est actionné à 2000 tours/minutes pendant 20 sec marque ensuite un temps d'arrêt de 45 sec, temps nécessaire pour sécher le solvant. Ensuite, ce protocole d'application et de séchage est répété jusqu'à l'addition de 1 à 2 mL de SOL1.

Finalement, les lames sont traitées thermiquement à 500 °C (20 °C/min) sous flux d'air (pendant 1 h).

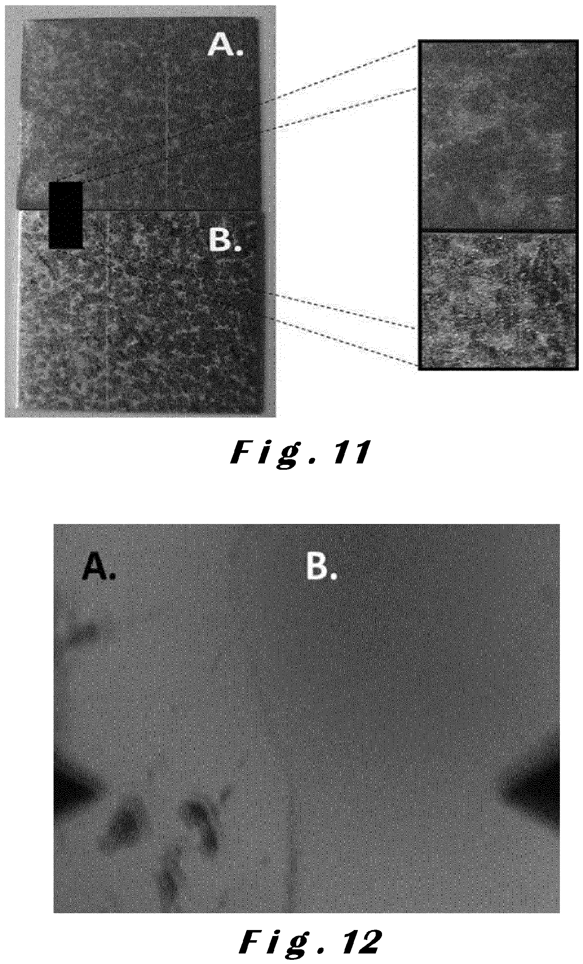

La figure 11 compare la photo d'une des plaques d'ALUSI® avant (Fig. 11b) et après (Fig. 11a) le spin-coating et calcination à 500°C pendant 1 h. On peut y observer la présence d'un dépôt (film bronzé) d'un solide distribué de manière homogène sur la plaque d'acier coaté par une couche d'ALUSI® (fonds gris).

### EXEMPLE 5.-

Dépôt d'une couche mince d'oxyde de cobalt (III) et lithium commercial (LiCoO₂-C) sur un substrat en silicium, recouvert d'un revêtement de platine (Pt°/Si).

L'oxyde de cobalt et lithium a été obtenu à partir de Aldrich Chemistry (lot#MKBF6341V). L'immobilisation de LiCoO₂-C a été effectuée sur des lames de Pt°/Si de dimensions: 2x2 cm².

Cette poudre est fonctionnalisée selon la procédure reprise à l'exemple 4 (étape de fonctionnalisation, LiCoO₂-C/F), elle est ensuite mise en solution colloïdale et déposée selon la procédure reprise à l'exemple 4 (Immobilisation de LiCoO₂-C) et le substrat est également pré-traité de la même manière que celle décrite aux exemples 1 et 4.

La figure 12 compare la photo d'une des plaques se Pt°/Si après le spin-coating et calcination à 500°C pendant 1 h. Deux zones peuvent être observées (A et B). La zone A correspond à la partie de la plaque de platine où n'est pas appliqué le colloïde et la zone B montre la présence d'un solide dispersé de manière homogène.

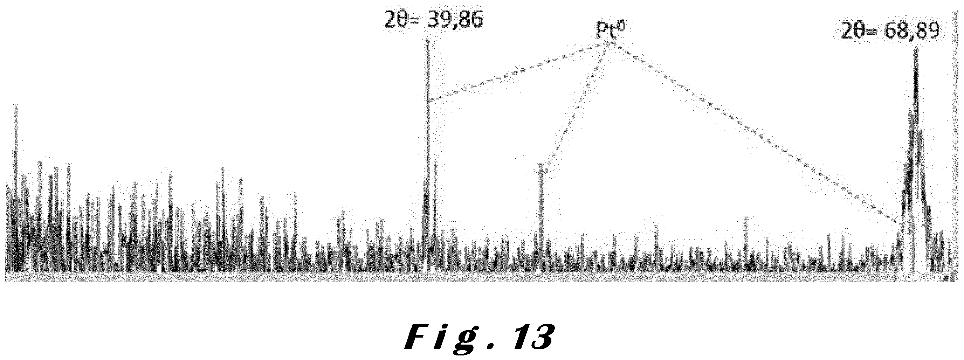

La figure 13 montre les profils de diffraction des rayons-X aux angles rasants (DRX) des plaques de platine avant l'application de colloïde de LiCoO₂-C et elle montre aussi les pics typiques observés pour le platine métallique. On observe que sur les lames vierges de platine métallique deux pics principaux sont observés à 2θ = 39,86 et 68,89. Ces pics coïncident avec les pics caractéristiques du platine métallique (identifiés Pt⁰)

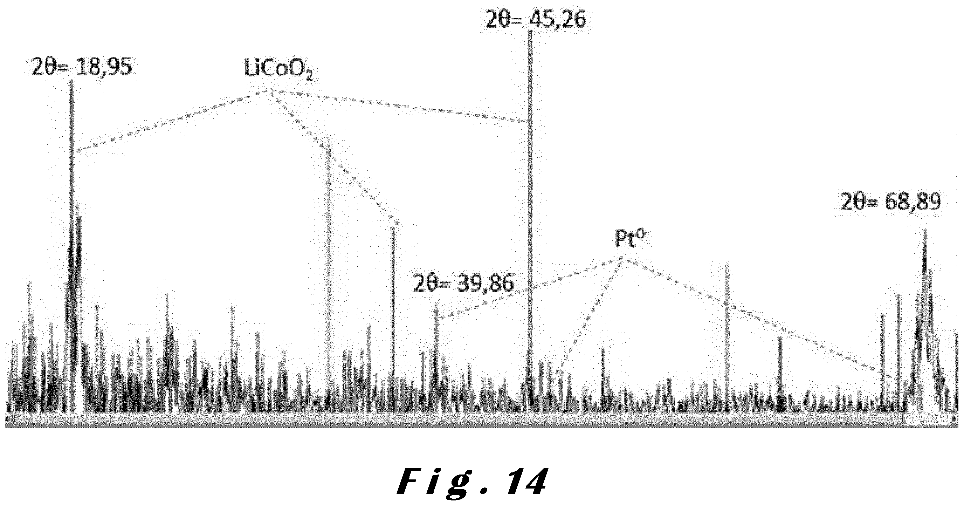

La figure 14 montre les profils de diffraction de DRX des plaques de platine après l'application spin-coating du système LiCoO₂-C dans de l'éthanol et après calcination 500°C pendant 1h. La figure 14 montre qu'en plus des pics caractéristiques du platine (2θ= 39,86 et 68,89), 2 autres nouveaux pics sont observés a 2θ= 18,95 et 45,26. Ces nouveaux pics coïncident avec les signaux les plus intenses du profil cristallographique caractéristique de LiCoO₂-C (lignes identifiées LiCoO₂-C).

### EXEMPLE 6.-

Dépôt d'une couche mince d'oxyde de cobalt (III) et de lithium commercial (LiCoO₂) sur un substrat en SiO₂ recouvert d'un revêtement de Platine pur (Pt°), revêtement particulièrement difficile à revêtir.

L'oxyde de cobalt et de lithium (LiCoO₂) a été acheté chez Sigma-Aldrich (n°CAS : 12190-79-3). L'immobilisation du LiCoO₂ a été effectuée sur des disques de SiO₂ recouvert d'un revêtement de Platine (Pt°, diamètre = 15 cm).

Avant leur utilisation, les disques ont été dégraissés, lavés et séchés. La fixation du LiCoO₂ a été effectuée par spray coating.

### Etape de pré-fonctionnalisation de LiCoO₂

Une solution de fonctionnalisation aqueuse Sf d'acide carboxylique (SA1) a été préparée en mélangeant 3,0 g d'acide 4-hydroxybenzoïque (4-HB) dans 600 mL d'eau désionisée, par agitation (1500 rpm) et en maintenant la température à 60°C (1 h). Ensuite, 36 g de LiCoO₂ ont été mis en suspension dans la solution SA1 par agitation (1500 rpm, pendant 24 h) et en maintenant la température à 60°C (suspension SA2). Ensuite, le solide noir (LiCoO₂-HB) a été récupéré par filtration de SA2 et a été lavé avec de l'eau chaude désionisée (1.2 L, 60°C). Le solide LiCoO₂-HB a été séché à 80°C pendant 24h.

### Etape de formation d'un sol colloïdal

Pour la préparation du colloïde de LiCoO₂-HB deux solutions ont été utilisées : une solution S1 de 300 mL de 2-méthoxyéthanol pure et une solution S2 a été préparée en ajoutant 7,2 mL d'eau désionisée dans 300mL de 2-méthoxyéthanol.

Ensuite, 3,0 g de LiCoO₂-HB ont été mis en suspension et dispersés dans 50 mL de la solution S1 (2-méthoxyéthanol) par ultrasons (30 min) et par agitation (1500 rpm, pendant 30 min) (suspension Sp1). A cette suspension, 50 mL de la solution S2 ont été ajoutés, la solution a ensuite été ultrasoniquée pendant 24 h. Pendant ce temps, on observe la formation d'une phase colloïdale. Le solide en excès a été séparé par une première centrifugation réalisée à 5000 tours/minutes pendant 1,5 minutes (18°C) et par une deuxième centrifugation réalisée à 8 tours/minutes pendant 8,5 minutes (18°C). Finalement, 100 mL du colloïde de LiCoO₂-HB/méthoxyéthanol/H₂O ont été obtenus.

Toute la procédure de la formation du sol colloïdal de LiCoO₂-HB a été répétée 6 fois jusqu'à l'obtention de près de 600 mL du colloïde LiCoO₂-HB/méthoxyéthanol/H₂O.

### Pré-traitement des disques SiO₂/Pt°

Une solution dégraissante a été préparée en mélangeant 15 g du produit S5183 (Gardoclean de Chemetal) dans 1l d'eau désionisée. Chacun des disques a été lentement submergé dans cette solution dégraissante pendant 2 secondes et enfin lentement sortie de la solution. Ces deux étapes ont été répétées 10 fois. Ensuite, les lames ont été lavées avec l'eau désionisée. Les disques ont été séchés à 120°C pendant 1 h.

### Immobilisation de LiCoO₂-HB/méthoxy-éthanol/H2O

Le disque est placé sur le support au centre du dispositif de spray coating qui a été préchauffé à 120°C. Ensuite, le spray-coating de colloïde LiCoO₂-HB/méthoxy-éthanol/H₂O a été réalisé et a permis de déposer 550 mL du colloïde LiCoO₂-HB/méthoxy-éthanol/H₂O à 120°C. Après séchage, une quantité de 0,10492 g de LiCoO₂-HB a été déposée sur le substrat SiO₂/Pt°. Enfin, l'étape de calcination réalisée à 350°C pendant 1h (20°C/min) a permis de déposer du LiCoO₂ à raison de 0,04836 g.

### EXEMPLE COMPARATIF 1.- Immobilisation in situ de MnO₂ pendant les synthèses sol-gel du MnO₂-birnessite

Par variation de la méthode proposée par Segal et al. (Chem. Mater. 1997, 9, 98-104), l'immersion de lames ALUSI® a été effectué dans un gel formé à partir de l'interaction entre KMnO₄ et saccharose. Les lames ainsi plongées dans le gel ont ensuite été séchées au four à 110 °C pendant 24 heures.

Les substrats ont été ensuite été chauffés à 450°C pendant 24 h. Après chauffage, un film noir a été observé. Toutefois, ce film était peu homogène et présentait très peu de stabilité mécanique et chimique. De plus, il se décrochait au contact avec l'eau.

### EXEMPLE COMPARATIF 2.- Immobilisation in situ de MnO₂ pendant les synthèses sol-gel du MnO₂-nsutite

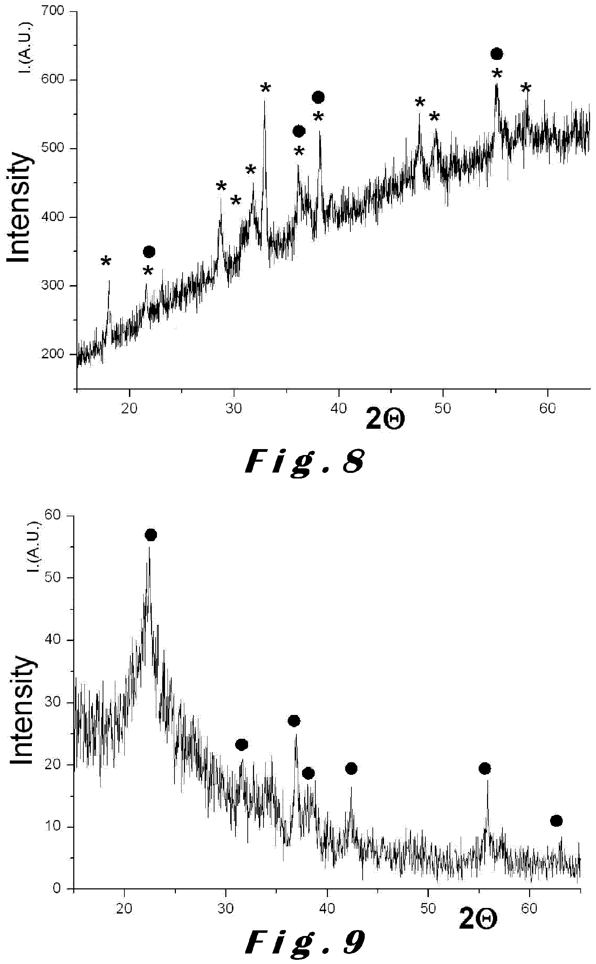

Cette méthode a été à l'origine proposée pour l'obtention de l'oxyde de manganèse nsutite en poudre (J. Sol-Gel Sci. Technol. 2009, 51, 169-174). Dans cet exemple ; on a suivi le même protocole mais les lames ont été introduites pendant la gélification de MnAc₂ (Acétate de manganèse 2) en présence d'acide citrique, pour l'obtention des films de MnO₂ L'application du gel a été effectuée par trois techniques, l'immersion, le dip-coating et le spin-coating. Toutefois, le manque d'affinité entre le solvant et les lames n'a pas permis la formation d'une couche sur le substrat. Finalement, la caractérisation par DRX illustrée à la figure 8 du produit de réaction (MnO₂ poudre) a montré qu'il ne s'agit pas précisément de MnO2-nsutite contrairement à ce que suggère l'article.

### EXEMPLE COMPARATIF 3.- Immobilisation de la poudre de MnO₂-ramsdellite via cogélification dans le film de silicate.

Une charge fixe de R-MnO₂ a été ajoutée à différentes concentrations à une solution aqueuse de silicate de sodium (28.5, 14.2, 7, 3.5 et 2.8 % en poids). Les suspensions ont été soumises à des ultrasons pendant 30 minutes et ont été agitées pendant 30 minutes supplémentaires. Les mélanges ont été déposés sur des lames d'ALUSI® par spin-coating, dip-coating et spatula-coating. Les films ont été séchés finalement à 120°C pendant 24 heures. De tous les films obtenus, le film préparé via spatula-coating et avec une concentration de 2.8 % de SiO₂ a été le seul qui a montré une stabilité mécanique acceptable. La figure 9 montre les profils de diffraction (DRX) de R-MnO2 du film après séchage. Comme on peut le voir, le MnO₂ de type ramsdellite est maintenu après le processus d'immobilisation (cercles noirs). Toutefois, sa stabilité au contact avec de l'eau est très faible.

### EXEMPLE COMPARATIF 4.- Immobilisation de la poudre de MnO₂-ramsdellite via cogélification dans le film de fluorure de polyvinylidène.

On a ajouté 0,005 g de R-MnO₂ à une solution de PVDF dans de la N-méthylpyrolidone (NMP). La suspension été soumises aux ultrasons pendant une période de 10 min et ensuite agitée pendant encore 5 min. Le mélange a été ensuite déposé sur des lames via imprégnation et a été séché à 120°C pendant 24 h. Le film a montré une faible stabilité mécanique et chimique.

### EXEMPLE COMPARATIF 5.- Immobilisation de la poudre de MnO₂-ramsdellite via co-gelification dans le film de silicate.

En suivant le protocole selon le schéma 2, J. Catal. 1997, 170, 366-376, après avoir suspendu le R-MnO₂ dans l'alcool, le mélange a été divisé en deux pour l'addition de TEOS (orthosilicate de tétraéthyle) et d'eau, respectivement. Le sol n'a montré aucune stabilité et a formé immédiatement un gel sans formation de film sur la lame ALUSI®.

### EXEMPLE COMPARATIF 6.- Immobilisation de la poudre de MnO₂-ramsdellite via cogélification avec TiO₂

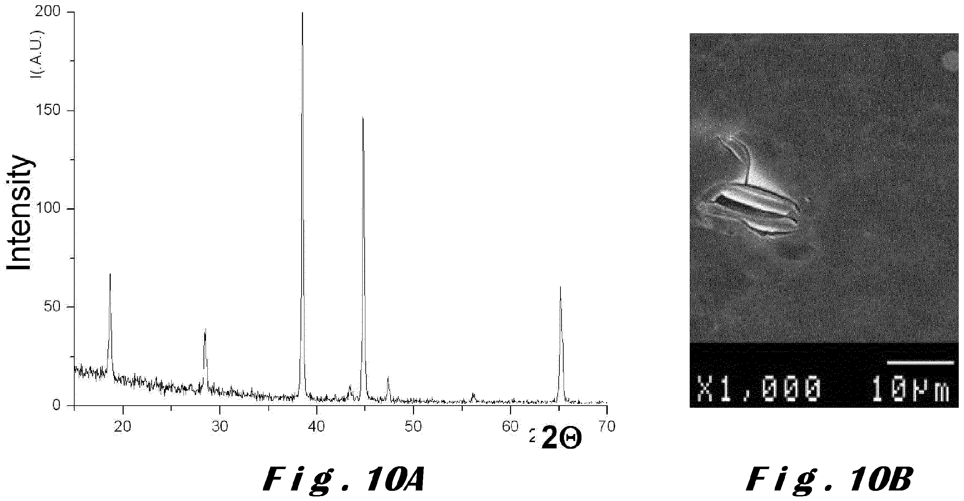

L'exemple comparatif 5 a été reproduit à la différence que le R-MnO₂ a été suspendu dans du 2-methoxyéthanol jusqu'à la formation d'une solution stable. Le colloïde a été divisé en deux parties. Du tétraisopropoxyde de titane a été ajouté à la première partie tandis que de l'eau a été ajoutée à la deuxième partie. Les films de R-MnO₂/TiO₂ ont été préparés pendant la gélification : (i) par spin-coating ou dip-coating ou spray et ont été ensuite séchés à 80°C pendant 1 h. Trois couches ont été ainsi appliquées. Les figures 10a et 10b montrent le profil de diffraction (DRX) et la photo SEM, respectivement, du revêtement de trois couches obtenu par dip-coating. Bien que ces films montrent chimiquement et mécaniquement une grande stabilité, on n'a pas observé la présence de R-MnO₂.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé de fabrication d'un matériau composite comprenant un substrat et un revêtement à base de poudre, comprenant
a) une fonctionnalisation du substrat par des groupements OH, ladite fonctionnalisation comprenant un traitement d'une surface dudit substrat par une première solution contenant au moins un premier solvant, choisi dans le groupe constitué de l'eau et des alcools organiques, à chaîne linéaire, saturée ou insaturée, comprenant au moins une fonction alcool, et de préférence choisi dans le groupe du méthoxyéthanol, de l'éthanol, de l'éthylène glycol, du 1-propanol, du méthanol, du n-butanol, du 2-phényléthanol et du 2-propanol et leurs mélanges,
b) fonctionnalisation dans un deuxième solvant d'une première poudre comprenant un oxyde d'alcalin, un oxyde d'alcalino-terreux, un oxyde de métal de transition, un oxyde de métal pauvre, un oxyde de métalloïde, un oxyde de lanthanide ou un oxyde d'actinide, de préférence un oxyde métallique et/ou un oxyde de silicium, de manière plus préférentielle comprenant un ou plusieurs oxydes choisi(s) dans le groupe des oxydes de lithium, de sodium, de cérium, de titane, de vanadium, de chrome, de molybdène, de manganèse, de fer, de cobalt, de palladium, de cuivre, de zinc, de cadmium, d'aluminium, de silicium, d'étain et de plomb et de leurs combinaisons, telles que les oxydes mixtes de cobalt et de lithium, de fer et de manganèse, de lithium et de titane, par un agent portant une fonction carboxyle ou carboxylate et formation d'un premier sol colloïdal stable à base de ladite première poudre, fonctionnalisée par ledit agent portant une fonction carboxyle ou carboxylate,
c) au moins une application d'au moins une couche dudit premier sol colloïdal sur le substrat fonctionnalisé,
d) un séchage de ladite au moins une couche dudit premier sol colloïdal et
e) une formation d'une couche de premier revêtement formé par ledit premier sol colloïdal, adhérant audit substrat, par chauffage à une température supérieure à 50°C et inférieure à 500°C,
ledit revêtement étant formé de ladite première poudre uniformément répartie.

2. Procédé selon la revendication 1, dans lequel lesdites étapes c) et d) sont répétées en alternance un nombre prédéterminé de fois correspondant au nombre de couches de ladite première poudre pour former ledit premier revêtement.

3. Procédé selon la revendication 1 ou la revendication 2, comprenant en outre, les étapes de
a) fonctionnalisation d'une nième poudre (n ≥ 2) comprenant un oxyde d'alcalin, un oxyde d'alcalino-terreux, un oxyde de métal de transition, un oxyde de métal pauvre, un oxyde de métalloïde, un oxyde de lanthanide, un oxyde d'actinide, de préférence, un oxyde métallique et/ou un oxyde de silicium, de manière plus préférentielle comprenant un ou plusieurs oxydes choisi(s) dans le groupe des oxydes de lithium, de sodium, de cérium, de titane, de vanadium, de chrome, de molybdène, de manganèse, de fer, de cobalt, de palladium, de cuivre, de zinc, de cadmium, d'aluminium, de silicium, d'étain et de plomb et de leurs combinaisons, telles que les oxydes mixtes de cobalt et de lithium, de fer et de manganèse, de lithium et de titane, et formation d'un nième (n ≥ 2) sol colloïdal contenant ladite nième (n ≥ 2) poudre, fonctionnalisée dans un Zième (Z ≥ n+1) solvant,
b) application d'au moins une couche dudit nième sol colloïdal de ladite nième poudre sur le substrat revêtu dudit (n-1)ème revêtement,
c) séchage de ladite au moins une couche dudit nième sol colloïdal et
d) éventuellement une formation d'une couche de revêtement formé par ledit nième sol colloïdal de la dite nième poudre, adhérant audit (n - 1)ème revêtement, par chauffage à une température supérieure à 50°C et inférieure à 500°C.

4. Procédé selon la revendication 3, dans lequel lesdites étapes b) et c) sont répétées en alternance un nombre prédéterminé de fois correspondant au nombre de couches de ladite nième poudre pour former ledit nième revêtement.

5. Procédé selon l'une quelconque des revendications 1 à 4, dans lequel ledit premier et/ou ledit nième sol colloïdal contient de l'eau.

6. Procédé selon l'une quelconque des revendications précédentes, dans lequel ledit substrat est choisi dans le groupe constitué d'un métal, du verre ou du quartz, d'un support céramique, de tout autre matériau revêtu de dioxyde de titane et des oxydes de silicium.

7. Procédé selon la revendication 6, dans lequel ledit métal est choisi dans le groupe constitué de l'acier, en particulier de l'acier à bas, moyen ou haut carbone, laminé ou non, revêtu ou non, mis en forme ou non, de l'acier inoxydable plat ou mis en forme, du platine, éventuellement déposé sur un autre support, de l'aluminium, laminé ou non, éventuellement mis en forme, plus particulièrement, ledit métal est choisi dans le groupe de l'acier revêtu en feuille, de l'acier pré-peint, de l'aluminium en feuille ou de l'acier revêtu d'une couche de dioxyde de titane.

8. Procédé selon la revendication 6, dans lequel ledit verre ou quartz est choisi dans le groupe constitué du verre alcalin ou non, plat ou mis en forme tel qu'en forme de tube, de fils ou de fibres, du quartz sous forme de feuille, de tube, de fils ou encore de fibres.

9. Procédé selon l'une quelconque des revendications 1 à 8, dans lequel ledit nième sol colloïdal est formé en présence d'un agent portant une fonction carboxyle ou carboxylate.

10. Procédé selon la revendication 9, dans lequel ladite étape de fonctionnalisation de ladite première poudre avec formation d'un premier sol colloïdal contenant ladite première poudre fonctionnalisée comprend les étapes de :
• préparation d'une première solution S1 dudit agent portant une fonction carboxyle ou carboxylate dans ledit deuxième solvant (SO1), lequel est choisi parmi les alcools organiques, à chaine linéaire, saturée ou insaturée, comprenant au moins une fonction alcool
• préparation d'une suspension Sp1 par dispersion de ladite première poudre dans ladite première solution S1,
• addition d'eau à ladite première solution S1 pour former une solution diluée S1d
• mélange de ladite solution S1d diluée et de ladite suspension Sp1 à une température comprise entre 10°C et la température de reflux dudit deuxième solvant et
• homogénéisation dudit mélange jusqu'à obtention dudit premier sol colloïdal contenant ladite première poudre fonctionnalisée.

11. Procédé selon la revendication 9 ou la revendication 10, dans lequel ladite étape de fonctionnalisation de ladite nième poudre (n ≥ 2) avec formation d'un nième (n ≥ 2) sol colloïdal contenant ladite nième poudre (n ≥ 2) fonctionnalisée comprend les étapes suivantes :
• préparation d'une nième (n ≥ 2) solution Sn dudit agent portant une fonction carboxyle ou carboxylate dans ledit Zième (Z ≥ n+1) solvant (SO₂),
• préparation d'une suspension Spn par dispersion de ladite nième poudre (n ≥ 2) poudre dans ladite nième (n ≥ 2) solution Sn,
• addition d'eau à ladite nième (n ≥ 2) solution Sn pour former une nième (n ≥ 2) solution diluée, Snd
• mélange de ladite nième (n ≥ 2) solution Snd diluée et de ladite suspension Spn à une température comprise entre 10°C et la température de reflux dudit Zième (Z ≥ n+1) solvant alcoolique et
• homogénéisation dudit mélange jusqu'à obtention dudit nième (n ≥ 2) sol colloïdal contenant ladite nième poudre (n ≥ 2) fonctionnalisée.

12. Procédé selon l'une quelconque des revendications 1 à 8, dans lequel ladite première poudre est fonctionnalisée dans un solvant de fonctionnalisation Sf, éventuellement en présence d'eau et dans lequel ledit premier sol colloïdal est formé par les étapes de
• préparation d'une suspension Sp1 par dispersion de ladite première poudre fonctionnalisée dans ledit deuxième solvant SO₁
• addition d'eau audit deuxième solvant SO₁ pour former une solution diluée S₁d
• mélange de ladite solution diluée S1d et de ladite suspension Sp1 à une température comprise entre 10°C et la température de reflux dudit deuxième solvant SO1,
• homogénéisation dudit mélange jusqu'à obtention d'un sol colloïdal intermédiaire contenant ladite première poudre fonctionnalisée et,
• une addition audit sol colloïdal intermédiaire d'une solution contenant un agent portant une fonction carboxyle ou carboxylate dans un troisième solvant, de préférence alcoolique pour former ledit premier sol colloïdal SOL1

13. Procédé selon la revendication 12, lorsqu'elle dépend de la revendication 3, dans lequel ladite nième poudre (n ≥ 2) est fonctionnalisée dans un solvant de fonctionnalisation Sf, éventuellement en présence d'eau et dans lequel ledit premier sol colloïdal est formé par les étapes de
• préparation d'une suspension Spn par dispersion de ladite nième poudre (n ≥ 2) dans ledit Zième (Z ≥ n+1) solvant (SOZ)
• addition d'eau audit Zième solvant (Z ≥ n+1) pour former une solution diluée Snd
• mélange de ladite solution diluée Snd et de ladite suspension Spn à une température comprise entre 10°C et la température de reflux dudit Zième solvant (Z ≥ n+1)
• homogénéisation dudit mélange jusqu'à obtention d'un sol colloïdal intermédiaire d'une solution contenant ladite nième poudre fonctionnalisée
• une addition audit sol colloïdal intermédiaire d'une solution contenant agent portant une fonction carboxyle ou carboxylate dans un troisième solvant, de préférence alcoolique pour former ledit nième sol colloïdal SOLn.

14. Procédé selon l'une quelconque des revendications 1 à 13, dans lequel ledit deuxième solvant, ledit troisième solvant et ledit Zième (Z ≥ n+1) solvant sont choisis indépendamment l'un de l'autre dans le groupe constitué de l'eau et des alcools organiques, à chaîne linéaire, saturée ou insaturée, comprenant au moins une fonction alcool, et de préférence choisi dans le groupe du méthoxyéthanol, de l'éthanol, de l'éthylène glycol, du 1-propanol, du méthanol, du n-butanol, du 2-phényléthanol et du 2-propanol et leurs mélanges et peuvent être identiques ou différents.

15. Procédé selon l'une quelconque des revendications 1 à 14, dans lequel ledit premier solvant comprend un additif, de préférence choisi dans le groupe de l'éthylène glycol, du polyéthylène glycol 200, du polyéthylène glycol 400, du polyéthylène glycol 1500, du polyéthylène glycol 10000 et du polyéthylène glycol 1500000, des alcools gras naturels éthoxylés, de préférence à base d'alcool de stearyle, du sulfonate sodique de dodécylbenzène et de l'acide 4-hydroxybenzoïque ainsi que de leurs mélanges.

16. Procédé selon l'une quelconque des revendications 12 à 15, dans lequel ledit solvant de fonctionnalisation est choisi dans le groupe constitué de l'éthylène glycol, du polyéthylène glycol 200, du polyéthylène glycol 400, du polyéthylène glycol 1500, du polyéthylène glycol 10000 et du polyéthylène glycol 1500000, des alcools gras naturels éthoxylés, de préférence à base d'alcool de stearyle, et du sulfonate sodique de dodécylbenzène, l'acide para hydroxybenzoique ainsi que de leurs mélanges.

17. Procédé selon l'une quelconque des revendications 9 à 16, dans lequel ledit agent portant une fonction carboxyle ou carboxylate est choisi dans le groupe des acides carboxyliques monofonctionnels ou polyfonctionnels, possédant éventuellement des chaînes alcool et/ou éventuellement des cycles benzéniques et/ou possédant des chaînes carbonées saturées ou insaturées, de préférence, ledit agent portant une fonction carboxyle ou carboxylate est l'acide 4-hydroxybenzoïque.

## Patentansprüche

1. Verfahren zur Herstellung eines Verbundwerkstoffs, umfassend ein Substrat und eine Beschichtung auf Basis von Pulver, umfassend
a) eine Funktionalisierung des Substrats durch OH-Gruppen, wobei die Funktionalisierung eine Behandlung einer Oberfläche des Substrats mit einer ersten Lösung umfasst, die mindestens ein erstes Lösungsmittel enthält, ausgewählt aus der Gruppe bestehend aus Wasser und organischen, geradkettigen, gesättigten oder ungesättigten Alkoholen, die mindestens eine Alkoholfunktion umfassen, und bevorzugt ausgewählt ist aus der Gruppe von Methoxyethanol, Ethanol, Ethylenglykol, 1-Propanol, Methanol, n-Butanol, 2-Phenylethanol und 2-Propanol und deren Mischungen,
b) Funktionalisierung in einem zweiten Lösungsmittel eines ersten Pulvers, umfassend ein Alkalioxid, ein Erdalkalioxid, ein Übergangsmetalloxid, ein mageres Metalloxid, ein Metalloidoxid, ein Lanthanidoxid oder ein Actinidoxid, bevorzugt ein Metalloxid und/oder ein Siliziumoxid, noch bevorzugter umfassend ein oder mehrere Oxide, ausgewählt aus der Gruppe der Lithium-, Natrium-, Cer-, Titan-, Vanadium-, Chrom-, Molybdän-, Mangan-, Eisen-, Kobalt-, Palladium-, Kupfer-, Zink-, Cadmium-, Aluminium-, Silizium-, Zinn- und Bleioxide und deren Kombinationen, wie Mischoxide aus Kobalt und Lithium, Eisen und Mangan, Lithium und Titan, durch ein Agens, das eine Carboxyl- oder Carboxylatfunktion trägt, und Bildung eines ersten stabilen kolloidalen Sols auf Basis des ersten Pulvers, das durch das Agens, das eine Carboxyl- oder Carboxylatfunktion trägt, funktionalisiert wird,
c) mindestens ein Auftragen mindestens einer Schicht des ersten kolloidalen Sols auf das funktionalisierte Substrat,
d) eine Trocknung der mindestens einen Schicht des ersten kolloidalen Sols und
e) eine Bildung einer Schicht der ersten Beschichtung, die durch das erste kolloidale Sol gebildet wird, die an dem Substrat haftet, durch Erhitzen auf eine Temperatur von über 50°C und unter 500°C,
wobei die Beschichtung aus dem ersten gleichmäßig verteilten Pulver gebildet ist.

2. Verfahren nach Anspruch 1, wobei die Schritte c) und d) abwechselnd eine vorbestimmte Anzahl von Malen wiederholt werden, die der Anzahl der Schichten des ersten Pulvers entspricht, um die erste Beschichtung zu bilden.

3. Verfahren nach Anspruch 1 oder Anspruch 2, ferner umfassend die Schritte
a) Funktionalisieren eines n-ten Pulvers (n ≥ 2), umfassend ein Alkalioxid, ein Erdalkalioxid, ein Übergangsmetalloxid, ein mageres Metalloxid, ein Metalloidoxid, ein Lanthanidoxid, ein Aktinidoxid, bevorzugt ein Metalloxid und/oder ein Siliziumoxid, noch bevorzugter umfassend ein oder mehrere Oxide, ausgewählt aus der Gruppe der Lithium-, Natrium-, Cer-, Titan-, Vanadium-, Chrom-, Molybdän, Mangan-, Eisen-, Kobalt-, Palladium-, Kupfer-, Zink-, Cadmium-, Aluminium-, Silizium-, Zinn- und Bleioxide und deren Kombinationen, wie die Mischoxide aus Kobalt und Lithium, Eisen und Mangan, Lithium und Titan, und Bildung eines n-ten (n ≥ 2) kolloidalen Sols, das das n-te (n ≥ 2) Pulver enthält, funktionalisiert in einem Z-ten (Z ≥ n+1) Lösungsmittel,
b) Auftragen mindestens einer Schicht des n-ten kolloidalen Sols des n-ten Pulvers auf das mit der (n-1)ten Beschichtung beschichtete Substrat,
c) Trocknen der mindestens einen Schicht des n-ten kolloidalen Sols und
d) gegebenenfalls Bildung einer Beschichtungsschicht, die durch das n-te kolloidale Sol des n-ten Pulvers gebildet wird, die an der (n-1)ten Beschichtung haftet, durch Erhitzen auf eine Temperatur von über 50°C und unter 500°C.

4. Verfahren nach Anspruch 3, wobei die Schritte b) und c) abwechselnd eine vorbestimmte Anzahl von Malen wiederholt werden, die der Anzahl der Schichten des n-ten Pulvers entspricht, um die n-te Beschichtung zu bilden.

5. Verfahren nach einem der Ansprüche 1 bis 4, wobei das erste und/oder n-te kolloidale Sol Wasser enthält.

6. Verfahren nach einem der vorstehenden Ansprüche, wobei das Substrat ausgewählt ist aus der Gruppe bestehend aus einem Metall, Glas oder Quarz, einem keramischen Träger, jedem anderen Material, das mit Titandioxid und Siliziumoxiden beschichtet ist.

7. Verfahren nach Anspruch 6, wobei das Metall ausgewählt ist aus der Gruppe bestehend aus Stahl, insbesondere aus Stahl mit niedrigem, mittlerem oder hohem Kohlenstoffgehalt, gewalzt oder nicht, beschichtet oder nicht, geformt oder nicht, aus flachem oder geformtem Edelstahl, Platin, gegebenenfalls auf einen anderen Träger aufgebracht, Aluminium, gewalzt oder nicht, gegebenenfalls geformt, insbesondere ist das Metall ausgewählt aus der Gruppe von Stahlblech, vorlackiertem Stahl, Aluminiumblech oder Stahl, der mit einer Titandioxidschicht beschichtet ist.

8. Verfahren nach Anspruch 6, wobei das Glas oder der Quarz ausgewählt ist aus der Gruppe bestehend aus alkalischem oder nicht-alkalischem, flachem oder geformtem Glas, wie etwa in Form eines Rohres, von Garnen oder Fasern, Quarz in Form von Folie, eines Rohrs, Garnen oder auch Fasern.

9. Verfahren nach einem der Ansprüche 1 bis 8, wobei das n-te kolloidale Sol in Gegenwart eines Agens, das eine Carboxyl- oder Carboxylatfunktion trägt, gebildet wird.

10. Verfahren nach Anspruch 9, wobei der Schritt des Funktionalisierens des ersten Pulvers samt Bildung eines ersten kolloidalen Sols, welches das erste funktionalisierte Pulver enthält, die Schritte umfasst:
• Herstellen einer ersten Lösung S1 des Agens, das eine Carboxyl- oder Carboxylatfunktion trägt, in dem zweiten Lösungsmittel (SO1), das ausgewählt ist aus den organischen, geradkettigen, gesättigten oder ungesättigten Alkoholen, die mindestens eine Alkoholfunktion umfassen
• Herstellen einer Suspension Sp1 durch Dispergieren des ersten Pulvers in der ersten Lösung S1,
• Zugeben von Wasser zu der ersten Lösung S1, um eine verdünnte Lösung S1d zu bilden
• Mischen der verdünnten Lösung S1d und der Suspension Sp1 bei einer Temperatur von zwischen 10°C und der Rückflusstemperatur des zweiten Lösungsmittels und
• Homogenisieren der Mischung bis zum Erhalt des ersten kolloidalen Sols, welches das erste funktionalisierte Pulver enthält.

11. Verfahren nach Anspruch 9 oder Anspruch 10, wobei der Schritt des Funktionalisierens des n-ten Pulvers (n ≥ 2) mit Bildung eines n-ten (n ≥ 2) kolloidalen Sols, welches das n-te funktionalisierte Pulver (n ≥ 2) enthält, die folgenden Schritte umfasst:
• Herstellen einer n-ten (n ≥ 2) Lösung Sn des Agens, das eine Carboxyl- oder Carboxylatfunktion trägt, in dem Z-ten (Z ≥ n+1) Lösungsmittel (SO₂),
• Herstellen einer Suspension Spn durch Dispergieren des n-ten Pulvers (n ≥ 2) Pulvers in der n-ten (n ≥ 2) Lösung Sn,
• Zugeben von Wasser zu der n-ten (n ≥ 2) Lösung Sn, um eine n-te (n ≥ 2) verdünnte Lösung Snd zu bilden
• Mischen der n-ten (n ≥ 2) verdünnten Lösung Snd und der Suspension Spn bei einer Temperatur von zwischen 10°C und der Rückflusstemperatur des Z-ten (Z ≥ n+1) alkoholischen Lösungsmittels und
• Homogenisieren der Mischung bis zum Erhalt des n-ten (n ≥ 2) kolloidalen Sols, welches das n-te (n ≥ 2) funktionalisierte Pulver enthält.

12. Verfahren nach einem der Ansprüche 1 bis 8, wobei das erste Pulver in einem Funktionalisierungslösungsmittel Sf, gegebenenfalls in Gegenwart von Wasser, funktionalisiert wird und wobei das erste kolloidale Sol gebildet wird durch die Schritte
• Herstellen einer Suspension Sp1 durch Dispergieren des ersten funktionalisierten Pulvers in dem zweiten Lösungsmittel SO₁
• Zugeben von Wasser zu dem zweiten Lösungsmittel SO₁, um eine verdünnte Lösung S₁d zu bilden
• Mischen der verdünnten Lösung S1d und der Suspension Sp1 bei einer Temperatur von zwischen 10°C und der Rückflusstemperatur des zweiten Lösungsmittels SO1,
• Homogenisieren der Mischung, bis zum Erhalt eines intermediären, kolloidalen Sols, welches das erste funktionalisierte Pulver enthält und,
• Zugabe zu dem intermediären, kolloidalen Sol einer Lösung, die ein Agens enthält, das eine Carboxyl- oder Carboxylatfunktion trägt, in einem dritten, bevorzugt alkoholischen Lösungsmittel, um das erste kolloidale Sol SOL1 zu bilden

13. Verfahren nach Anspruch 12, wenn von Anspruch 3 abhängig, wobei das n-te Pulver (n ≥ 2) in einem Funktionalisierungslösungsmittel Sf, gegebenenfalls in Gegenwart von Wasser, funktionalisiert wird und wobei das erste kolloidale Sol gebildet wird durch die Schritte
• de Herstellen einer Suspension Spn durch Dispergieren des n-ten Pulvers (n ≥ 2) in dem Z-ten (Z ≥ n+1) Lösungsmittel (SOZ)
• de Zugeben von Wasser zu dem Z-ten Lösungsmittel (Z ≥ n+1), um eine verdünnte Lösung Snd zu bilden
• de Mischen der verdünnten Lösung Snd und der Suspension Spn bei einer Temperatur von zwischen 10°C und der Rückflusstemperatur des Z-ten Lösungsmittels (Z ≥ n+1)
• de Homogenisieren der Mischung bis zum Erhalt eines intermediären, kolloidalen Sols einer Lösung, welche das n-te funktionalisierte Pulver enthält
• Zugabe zu dem intermediären, kolloidalen Sol einer Lösung, die ein Agens enthält, das eine Carboxyl- oder Carboxylatfunktion trägt, in einem dritten, bevorzugt alkoholischen Lösungsmittel, um das n-te kolloidale Sol SOLn zu bilden.

14. Verfahren nach einem der Ansprüche 1 bis 13, wobei das zweite Lösungsmittel, das dritte Lösungsmittel und das Z-te Lösungsmittel (Z ≥ n+1) unabhängig voneinander ausgewählt sind aus der Gruppe bestehend aus Wasser und organischen, geradkettigen, gesättigten oder ungesättigten Alkoholen, umfassend mindestens eine Alkoholfunktion, und bevorzugt ausgewählt aus der Gruppe von Methoxyethanol, Ethanol, Ethylenglykol, 1-Propanol, Methanol, n-Butanol, 2-Phenylethanol und 2-Propanol und deren Mischungen, und identisch oder unterschiedlich sein können.

15. Verfahren nach einem der Ansprüche 1 bis 14, wobei das erste Lösungsmittel ein Additiv umfasst, das bevorzugt ausgewählt ist aus der Gruppe von Ethylenglykol, Polyethylenglykol 200, Polyethylenglykol 400, Polyethylenglykol 1500, Polyethylenglykol 10000 und Polyethylenglykol 1500000, ethoxylierten natürlichen Fettalkoholen, bevorzugt auf Basis von Stearylalkohol, Dodezylbenzol-Natriumsulfonat und 4-Hydroxybenzoesäure sowie deren Mischungen.

16. Verfahren nach einem der Ansprüche 12 bis 15, wobei das Funktionalisierungslösungsmittel ausgewählt ist aus der Gruppe bestehend aus Ethylenglykol, Polyethylenglykol 200, Polyethylenglykol 400, Polyethylenglykol 1500, Polyethylenglykol 10000 und Polyethylenglykol 1500000, ethoxylierten natürlichen Fettalkoholen, bevorzugt auf Basis von Stearylalkohol, und Dodezylbenzol-Natriumsulfonat, Parahydroxybenzoesäure sowie deren Mischungen.

17. Verfahren nach einem der Ansprüche 9 bis 16, wobei das Agens, das eine Carboxyl- oder Carboxylatfunktion trägt, ausgewählt ist aus der Gruppe der monofunktionellen oder polyfunktionellen Carboxylsäuren, die gegebenenfalls Alkoholketten und/oder gegebenenfalls Benzolringe und/oder gesättigte oder ungesättigte Kohlenstoffketten aufweisen, wobei bevorzugt das Agens, das eine Carboxyl- oder Carboxylatfunktion trägt, die 4-Hydroxybenzoesäure ist.

## Claims

1. A process for manufacturing a composite material comprising a substrate and a coating based on powder, comprising
a) functionalizing the substrate by OH groups, said functionalizing comprising treating a surface of said substrate with a first solution containing at least one first solvent, chosen from the group consisting of water and organic alcohols, with a linear chain, saturated or unsaturated, comprising at least one alcohol function, and preferably chosen from the group of methoxyethanol, ethanol, ethylene glycol, 1-propanol, methanol, n-butanol, 2-phenylethanol and 2-propanol and mixtures thereof,
b) functionalizing in a second solvent of a first powder comprising an alkali oxide, an alkaline earth oxide, a transition metal oxide, a poor metal oxide, a metalloid oxide, a lanthanide oxide or an actinide oxide, preferably a metal oxide and/or a silicon oxide, more preferably comprising one or more oxides chosen from the group of oxides of lithium, of sodium, of cerium, of titanium, of vanadium, of chromium, of molybdenum, of manganese, of iron, of cobalt, of palladium, of copper, of zinc, of cadmium, of aluminium, of silicon, of tin and lead and combinations thereof, such as mixed oxides of cobalt and lithium, iron and manganese, lithium and titanium, with an agent bearing a carboxyl or carboxylate function and formation of a first stable colloidal sol based on said first powder, functionalized by said agent bearing a carboxyl or carboxylate function,
c) at least one application of at least one layer of said first colloidal sol on the functionalized substrate,
d) drying said at least one layer of said first colloidal sol
and
e) forming a first coating layer formed by said first colloidal sol, adhering to
said substrate, by heating at a temperature above 50°C and below 500°C, said coating being formed from said first powder uniformly distributed.

2. The process according to claim 1, wherein said steps c) and d) are repeated alternately a predetermined number of times corresponding to the number of layers of said first powder to form said first coating.

3. The process according to claim 1 or claim 2, further comprising the steps of
a) functionalizing an nth powder (n ≥ 2) comprising an alkali oxide, an alkaline earth oxide, a transition metal oxide, a poor metal oxide, a metalloid oxide, a lanthanide oxide, an actinide oxide, preferably a metal oxide and/or a silicon oxide, more preferably comprising one or more oxides chosen from the group of oxides of lithium, of sodium, of cerium , of titanium, of vanadium, of chromium, of molybdenum, of manganese, of iron, of cobalt, of palladium, of copper, of zinc, of cadmium, of aluminium, of silicon, of tin and of lead and combinations thereof, such as mixed oxides of cobalt and lithium, of iron and manganese, of lithium and titanium, and forming an nth (n ≥ 2) colloidal sol containing said nth (n ≥ 2) powder, functionalized in a Zth (Z ≥ n+1) solvent,
b) applying at least one layer of said nth colloidal sol of said nth powder to the substrate coated with said (n-1)th coating,
c) drying said at least one layer of said nth colloidal sol and
d) optionally forming a coating layer formed by said nth colloidal sol of said nth powder, adhering to said (n-1)th coating, by heating at a temperature above 50°C and below 500°C.

4. The process according to claim 3, wherein said steps b) and c) are repeated alternately a predetermined number of times corresponding to the number of layers of said nth powder to form said nth coating.

5. The process according to any one of claims 1 to 4, wherein said first and/or said nth colloidal sol contains water.

6. The process according to any one of the preceding claims, wherein said substrate is chosen from the group consisting of a metal, glass or quartz, a ceramic support, any other material coated with titanium dioxide and silicon oxides.

7. The process according to claim 6, wherein said metal is chosen from the group consisting of steel, in particular low, medium or high carbon steel, laminated or not, coated or not, shaped or not, flat or shaped stainless steel, platinum, optionally deposited on another support, aluminium, laminated or not, optionally shaped, more particularly, said metal is chosen from the group of sheet-coated steel, pre-painted steel, aluminium in sheet-like or steel coated with a layer of titanium dioxide.

8. The process according to claim 6, wherein said glass or quartz is chosen from the group consisting of alkaline or non-alkaline glasses, flat or shaped in a form such as tube, wire or fibres, quartz in sheet, tube, wires or fibres form.

9. The process according to any of claims 1 to 8, wherein said nth colloidal sol is formed in the presence of an agent bearing a carboxyl or carboxylate function.

10. The process according to claim 9, wherein said step of functionalizing said first powder with formation of a first colloidal sol containing said first functionalized powder comprises the steps of:
• preparing a first solution S1 of said agent bearing a carboxyl or carboxylate function in said second solvent (SO1), which is chosen from organic alcohols, a linear chain, saturated or unsaturated, comprising at least one alcohol function
• preparing a suspension Sp1 by dispersing said first powder in said first solution S1,
• adding water to said first solution S1 to form a diluted solution S1d
• mixing said diluted solution S1d and said suspension Sp1 at a temperature between 10°C and the reflux temperature of said second solvent and
• homogenizing said mixture until said first colloidal sol containing said first functionalized powder is obtained.

11. The process according to claim 9 or claim 10, wherein said step of functionalizing said nth powder (n ≥ 2) with formation of an nth (n ≥ 2) colloidal sol containing said nth powder (n ≥ 2) functionalized comprises the following steps:
• preparing an nth (n ≥ 2) solution Sn of said agent bearing a carboxyl or carboxylate function in said Zth (Z ≥ n+1) solvent (SO₂),
• preparing a suspension Spn by dispersing said nth powder (n ≥ 2) powder in said nth (n ≥ 2) solution Sn,
• adding water to said nth (n ≥ 2) solution Sn to form an nth (n ≥ 2) diluted solution, Snd
• mixing said nth (n ≥ 2) diluted solution Snd and said suspension Spn at a temperature between 10°C and the reflux temperature of said Zth (Z ≥ n+1) alcoholic solvent and
• homogenizing said mixture until said nth (n ≥ 2) colloidal sol containing said nth (n ≥ 2) functionalized powder is obtained.

12. The process according to any one of claims 1 to 8, wherein said first powder is functionalized in a functionalizing solvent Sf, optionally in the presence of water and wherein said first colloidal sol is formed by the steps of
• preparing a suspension Sp1 by dispersing said first functionalized powder in said second solvent SO₁
• adding water to said second SO₁ solvent to form a diluted solution S₁d
• mixing said diluted solution S1d and said suspension Sp1 at a temperature between 10°C and the reflux temperature of said second solvent SO1,
• homogenizing said mixture until an intermediate colloidal sol containing said first functionalized powder is obtained and,
• adding to said intermediate colloidal sol of a solution containing an agent having a carboxyl or carboxylate function in a third solvent, preferably an alcoholic solvent, to form said first colloidal sol SOL1.

13. The process according to claim 12, when it depends on claim 3, wherein said nth (n ≥ 2) powder is functionalized in a functionalizing solvent Sf, optionally in the presence of water and wherein said first colloidal sol is formed by the steps of
• preparing a suspension Spn by dispersing said nth powder (n ≥ 2) in said Zth (Z ≥ n+1) solvent (SOZ)
• adding water to said Zth solvent (Z ≥ n+1) to form a diluted solution Snd
• mixing said diluted solution Snd and said suspension Spn at a temperature between 10°C and the reflux temperature of said Zth solvent (Z ≥ n+1)
• homogenizing said mixture until an intermediate colloidal sol is obtained from a solution containing said nth functionalized powder
• adding to said intermediate colloidal sol of a solution containing an agent bearing a carboxyl or carboxylate function in a third solvent, preferably an alcoholic solvent, to form said nth colloidal sol SOLn.

14. The process according to any of claims 1 to 13, wherein said second solvent, said third solvent and said Zth (Z ≥ n+1) solvent are independently chosen from the group consisting of water and organic alcohols, a linear chain, saturated or unsaturated, comprising at least one alcohol function, and preferably chosen from the group of methoxyethanol, ethanol, ethylene glycol, 1-propanol, methanol, n-butanol, 2-phenylethanol and 2-propanol and the mixtures thereof and may be identical or different.

15. The process according to any of claims 1 to 14, wherein said first solvent comprises an additive, preferably chosen from the group of ethylene-glycol, polyethylene-glycol 200, polyethylene-glycol 400, polyethylene-glycol 1500, polyethylene glycol 10000 and polyethylene glycol 1500000, ethoxylated natural fatty alcohols, preferably based on stearyl alcohol, dodecylbenzene sodium sulphonate and 4-hydroxybenzoic acid and mixtures thereof.

16. The process according to any of claims 12 to 15, wherein said functionalization solvent is chosen from the group consisting of ethylene-glycol, polyethylene-glycol 200, polyethylene-glycol 400, polyethylene-glycol 1500, polyethylene glycol 10000 and polyethylene glycol 1500000, ethoxylated natural fatty alcohols, preferably based on stearyl alcohol, and dodecylbenzene sodium sulfonate, para hydroxybenzoic acid and mixtures thereof.

17. The process according to any of claims 9 to 16, wherein said agent having a carboxyl or carboxylate function is chosen from the group of monofunctional or polyfunctional carboxylic acids, optionally having alcohol chains and/or optionally benzenic rings and/or having saturated or unsaturated carbon chains, preferably said agent bearing a carboxyl or carboxylate function is 4-hydroxybenzoic acid.
